# EUROPEAN PATENT APPLICATION

(11) **EP 4 770 204 A1**
(43) Date of publication of application: **01.07.2026**
(21) Application number: 25796449.4
(22) Date of filing: 29.10.2025
(51) Int. Cl.: H04W 48/16, H04W 72/51, H04W 8/00, H04W 72/0453, H04W 72/0457, H04L 5/00, H04W 84/12

(54) **ELECTRONIC DEVICE FOR PERFORMING NAN COMMUNICATION THROUGH FREQUENCY BAND OF DFS CHANNEL AND FREQUENCY BAND OF NON-DFS CHANNEL, AND OPERATION METHOD OF ELECTRONIC DEVICE**

(30) Priority: 30.10.2024 KR 20240151087; 22.11.2024 KR 20240168341
(71) Applicant: Samsung Electronics Co., Ltd., Suwon-si, Gyeonggi-do 16677 (KR)
(72) Inventor: JUNG, Buseop, Suwon-si, Gyeonggi-do 16677 (KR); KIM, Junsung, Suwon-si, Gyeonggi-do 16677 (KR)
(74) Representative: Gulde & Partner
(86) International application number: PCT/KR2025/017431
(87) International publication number: WO 2026/095605

(57) **Abstract**

In an electronic device and an operating method thereof according to an embodiment, the electronic device may include a communication circuitry supporting short-range wireless communication and neighbor awareness network (NAN) communication; a memory storing at least one computer program; and at least one processor. The at least one computer program may include instructions that cause, when executed by the at least one processor individually or collectively, the electronic device to connect to a first access point (AP) through a non-dynamic frequency selection (non-DFS) channel, transmit, to an external electronic device, a first service discovery frame including information related to a DFS channel and information indicating a maximum bandwidth supportable by the electronic device, in a process of discovering the external electronic device to be connected via an NAN data path (NDP), connect to a second AP supporting the DFS through the DFS channel while maintaining a connection between the first AP and the electronic device, upon identifying, based on a second service discovery frame received from the external electronic device, that the external electronic device supports the DFS and a maximum bandwidth supportable by the external electronic device is greater than a bandwidth of the non-DFS channel, establish the NDP with the external electronic device, based on the first service discovery frame and/or the second service discovery frame, and perform NAN communication with the external electronic device, based on first schedule information related to performing the NAN communication through a frequency band of the non-DFS channel and a frequency band of the DFS channel. The first schedule information may enable the external electronic device and the electronic device to perform the NAN communication through the frequency band of the non-DFS channel and the frequency band of the DFS channel during a first period between discovery windows.

## Description

### [Technical Field]

The disclosure relates to an electronic device and an operating method thereof, and relates to an electronic device that performs neighbor awareness network (NAN) communication through a frequency band of a dynamic frequency selection (DFS) channel and a frequency band of a non-DFS channel.

### [Background Art]

With the proliferation of various electronic devices, advancements in wireless communication speeds for these devices have been realized.

In addition, various types of proximity services utilizing low-power discovery technology are currently being developed. For example, proximity services (or proximity communication services) that allow neighboring electronic devices to quickly exchange data through a proximity network are being developed. The proximity services may include low-power proximity services using Bluetooth low energy (BLE) beacons, or low-power proximity services based on wireless local area network (WLAN)-based low-power short-range communication technologies (e.g., neighbor awareness networking (NAN), Wi-Fi aware) (hereinafter referred to as 'NAN').

According to an embodiment, an NAN-based low-power proximity service (hereinafter referred to as "proximity service") refers to a service that utilizes a proximity network that dynamically changes according to the movement of an electronic device, and a set of electronic devices that constitutes a proximity network may be referred to as a cluster. In the case of the proximity service, electronic devices included in the cluster may transmit and receive a signal for discovery (e.g., a beacon) and a service discovery frame (SDF) (hereinafter referred to as "SDF") within a synchronized time duration (or communication period). For example, at least one electronic device within the cluster may transmit a signal to indicate the cluster's presence, and a new electronic device attempting to join the cluster may receive that signal.

Each electronic device in the cluster may configure different active durations for transmitting and receiving signals in order to reduce current consumption (or power consumption). In NAN communication, the active duration during which signals can be transmitted and received may be referred to as a discovery window (DW). In addition, electronic devices included in the cluster may reduce current consumption by maintaining a low-power state (e.g., sleep state) during periods excluding the discovery window.

Recently, electronic devices that support short-range wireless communication can perform short-range wireless communication using channels with relatively low congestion (or channel utilization). According to an example, the electronic device can perform short-range wireless communication using a dynamic frequency selection (DFS) channel.

Dynamic frequency selection may refer to a technology that enables performing short-range wireless communication through a DFS channel, which is a channel used for various purposes (e.g., military purposes or weather observation purposes). The DFS channel may have relatively low congestion (or channel utilization) compared to other channels, and the performance of short-range wireless communication through the DFS channel may be higher than the performance of short-range wireless communication using other channels. Short-range wireless communication using the DFS channel is increasingly being applied to a variety of short-range wireless communications.

### [Disclosure of Invention]

### [Technical Problem]

An electronic device may perform an operation for performing device-to-device communication (e.g., Wi-Fi direct, neighbor awareness networking (NAN)) with an external electronic device while connected to an access point (AP) that supports short-range wireless communication. The electronic device may be configured to perform device-to-device communication using the same channel as a channel between the electronic device and the AP. However, in the case where the maximum bandwidth that the electronic device and the external electronic device can support is greater than a bandwidth of the channel between the electronic device and the AP, the electronic device may not be able to use a bandwidth greater than the bandwidth of the channel between the electronic device and the AP even though it supports a bandwidth greater than the bandwidth of the channel between the electronic device and the AP.

Performing device-to-device communication using the same channel as the channel between the electronic device and the AP even though the electronic device and the external electronic device can support a larger bandwidth may not implement an improvement in the quality of a service using device-to-device communication.

The technical problems to be solved in embodiments of the disclosure are not limited to those mentioned above, and other technical problems not mentioned can be clearly understood from the description below by a person skilled in the technical field to which the disclosure belongs.

### [Solution to Problem]

An electronic device according to an example may include a communication circuitry supporting short-range wireless communication and neighbor awareness network (NAN) communication. The electronic device may include a memory storing at least one computer program. The electronic device may include at least one processor. The at least one computer program may include instructions that cause, when executed by the at least one processor individually or collectively, the electronic device to connect to a first access point (AP) through a non-dynamic frequency selection (non-DFS) channel. The instructions may cause, when executed by the at least one processor individually or collectively, the electronic device to transmit, to an external electronic device, a first service discovery frame including information related to a DFS channel and information indicating a maximum bandwidth supportable by the electronic device, in a process of discovering the external electronic device to be connected via an NAN data path (NDP). The instructions may cause, when executed by the at least one processor individually or collectively, the electronic device to connect to a second AP supporting the DFS through the DFS channel while maintaining a connection between the first AP and the electronic device, upon identifying, based on a second service discovery frame received from the external electronic device, that the external electronic device supports the DFS and a maximum bandwidth supportable by the external electronic device is greater than a bandwidth of the non-DFS channel. The instructions may cause, when executed by the at least one processor individually or collectively, the electronic device to establish the NDP with the external electronic device, based on the first service discovery frame and/or the second service discovery frame. The instructions may cause, when executed by the at least one processor individually or collectively, the electronic device to perform NAN communication with the external electronic device, based on first schedule information related to performing the NAN communication through a frequency band of the non-DFS channel and a frequency band of the DFS channel. The first schedule information may enable the external electronic device and the electronic device to perform the NAN communication through the frequency band of the non-DFS channel and the frequency band of the DFS channel during a first period between discovery windows.

In a recording medium storing at least one program including instructions that cause, when executed by at least one processor of an electronic device individually or collectively, the electronic device to perform operations, the instructions may cause, when executed by the at least one processor individually or collectively, the electronic device to connect to a first access point (AP) through a non-dynamic frequency selection (non-DFS) channel. The instructions may cause, when executed by the at least one processor individually or collectively, the electronic device to transmit, to an external electronic device, a first service discovery frame including information related to a DFS channel and information indicating a maximum bandwidth supportable by the electronic device, in a process of discovering the external electronic device to be connected via an NAN data path (NDP). The instructions may cause, when executed by the at least one processor individually or collectively, the electronic device to connect to a second AP supporting the DFS through the DFS channel while maintaining a connection between the first AP and the electronic device, upon identifying, based on a second service discovery frame received from the external electronic device, that the external electronic device supports the DFS and a maximum bandwidth supportable by the external electronic device is greater than a bandwidth of the non-DFS channel. The instructions may cause, when executed by the at least one processor individually or collectively, the electronic device to establish the NDP with the external electronic device, based on the first service discovery frame and/or the second service discovery frame. The instructions may cause, when executed by the at least one processor individually or collectively, the electronic device to perform NAN communication with the external electronic device, based on first schedule information related to performing the NAN communication through a frequency band of the non-DFS channel and a frequency band of the DFS channel. The first schedule information may enable the external electronic device and the electronic device to perform the NAN communication through the frequency band of the non-DFS channel and the frequency band of the DFS channel during a first period between discovery windows.

An operating method of an electronic device according to an example may include an operation of connecting to a first access point (AP) through a non-dynamic frequency selection (non-DFS) channel. The operating method of the electronic device may include an operation of transmitting, to an external electronic device, a first service discovery frame including information related to a DFS channel and information indicating a maximum bandwidth supportable by the electronic device, in a process of discovering the external electronic device to be connected via a neighbor awareness network (NAN) data path (NDP). The operating method of the electronic device may include an operation of connecting to a second AP supporting the DFS through the DFS channel while maintaining a connection between the first AP and the electronic device, upon identifying, based on a second service discovery frame received from the external electronic device, that the external electronic device supports the DFS and a maximum bandwidth supportable by the external electronic device is greater than a bandwidth of the non-DFS channel. The operating method of the electronic device may include an operation of establishing the NDP with the external electronic device, based on the first service discovery frame and/or the second service discovery frame. The operating method of the electronic device may include an operation of performing NAN communication with the external electronic device, based on first schedule information related to performing the NAN communication through a frequency band of the non-DFS channel and a frequency band of the DFS channel. The first schedule information may enable the external electronic device and the electronic device to perform the NAN communication through the frequency band of the non-DFS channel and the frequency band of the DFS channel during a first period between discovery windows.

### [Advantageous Effects of invention]

In an electronic device and an operating method thereof according to an example, the electronic device can activate a function (e.g., a dual STA interface) capable of connecting to at least two APs simultaneously, in the case where an external electronic device supports a dynamic frequency selection (DFS) and a maximum bandwidth supportable by the external electronic device is greater than a bandwidth of a non-DFS channel established between the electronic device and a first AP. The electronic device can connect to a second AP supporting the DFS, configure first schedule information to perform NAN communication through a frequency band of the non-DFS channel and a frequency band of the DFS channel, and perform NAN communication based on the first schedule information. Accordingly, the electronic device can perform NAN communication utilizing a bandwidth greater than the bandwidth of the non-DFS channel, thereby improving the quality of a service using NAN communication.

The effects obtainable from the disclosure are not limited to those mentioned above, and other effects not mentioned can be clearly understood from the description below by a person skilled in the art to which the disclosure belongs.

### [Brief Description of Drawings]

FIG. 1 is a block diagram of an electronic device according to an embodiment.
FIG. 2 is a diagram illustrating a neighbor awareness network (NAN) cluster according to an embodiment.
FIG. 3 is a diagram illustrating a protocol for transmitting a signal of an electronic device included in an NAN cluster according to an embodiment.
FIG. 4 is a diagram illustrating an example of data transmission and reception within an NAN cluster according to an embodiment.
FIG. 5 is a diagram illustrating an electronic device, an external electronic device, and at least one AP according to an embodiment.
FIG. 6 is a block diagram of an electronic device according to an embodiment.
FIG. 7 is a diagram illustrating first schedule information for performing NAN communication through a frequency band of a non-DFS channel and a frequency band of a DFS channel by an electronic device according to an embodiment.
FIG. 8 is a diagram illustrating an example of performing NAN communication based on first schedule information related to NAN communication through a frequency band of a non-DFS channel and a frequency band of a DFS channel by an electronic device according to one embodiment.
FIG. 9 is a diagram illustrating an example of performing NAN communication based on first schedule information related to NAN communication through a frequency band of a non-DFS channel and a frequency band of a DFS channel by an electronic device according to one embodiment.
FIG. 10 is a diagram illustrating an example of performing NAN communication based on first schedule information related to NAN communication through a frequency band of a non-DFS channel and a frequency band of a DFS channel by an electronic device according to one embodiment.
FIG. 11 is a diagram illustrating an example of performing NAN communication based on first schedule information related to NAN communication through a frequency band of a non-DFS channel and a frequency band of a DFS channel by an electronic device according to one embodiment.
FIG. 12 is a flowchart illustrating an operating method of an electronic device according to an embodiment.

### [Mode for the Invention]

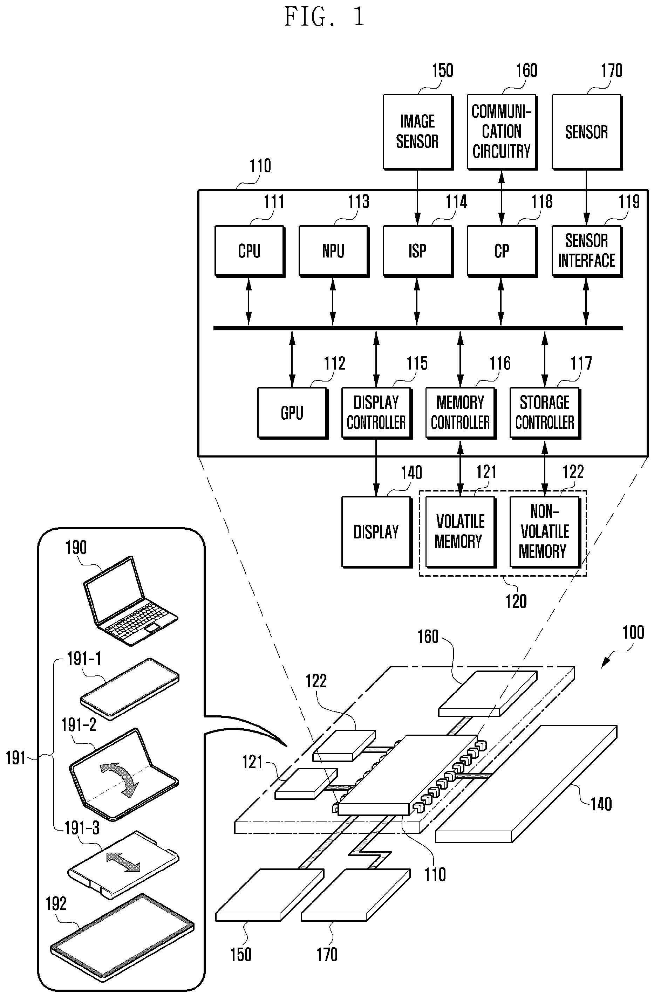

FIG. 1 illustrates a block diagram of an exemplary electronic device 100 capable of performing the operations described herein.

Referring to FIG. 1, the electronic device 100 may be one of various types of electronic devices, such as a notebook computer 190, smartphones 191 having various form factors (e.g., a bar-type smartphone 191-1, a foldable smartphone 191-2, or a slidable (or rollable) smartphone 191-3), a tablet PC 192, a cellular telephone (not shown), and any other similar computing devices (not shown). The components illustrated in FIG. 1, the relationships thereof, and the functions thereof are merely for illustration, and are not intended to limit the implementations described or claimed in the disclosure thereto. The electronic device 100 may be referred to as a mobile device, a user equipment, a multifunctional device, a portable device, or a server.

The electronic device 100 may comprise various components including at least one processor 110 (hereinafter, the processor 110), at least one memory 120 (hereinafter, the memory 120), at least one display 140 (hereinafter, the display 140), at least one image sensor 150 (hereinafter, the image sensor 150), at least one communication circuitry 160 (hereinafter, the communication circuitry 160), and/or at least one sensor 170 (hereinafter, the sensor 170). The aforementioned components are merely of an example. For example, the electronic device 100 may comprise other components (e.g., a power management integrated circuitry (PMIC), an audio processing circuitry, an antenna, a rechargeable battery, or an input/output interface). For example, some components may be omitted from the electronic device (100). For example, some components may be integrated into one component.

The processor 110 may be implemented as one or more integrated circuit (or circuitry) (IC) chips and may perform various data processing. The processor 110 may include at least one electrical circuitry and may process instructions (or program, data, and so on) stored in the memory 120 individually or collectively in a distributed manner. The processor 110 may include a processor assembly that includes one or more processing circuitries. The processor may include any processing circuitry that may be operative for controlling operations and performance of one or more components (e.g., the memory 120, a display 140, the image sensor 150, the communication circuitry 160, and/or the sensor 170) of the electronic device. For example, the processor 110 (e.g., an application processor (AP)) may be implemented as a system on chip (SoC) (e.g., one chip or chipset). For example, the processor 110 may be implemented as a plurality of cores (or at least one core circuitry), a plurality of chips, or a plurality of chipsets. For example, the processor 110 may comprise one or more processing circuitry. For example, the processor 110 may comprise one or more processing circuitry which are individually and/or collectively configured to perform various functions of the present disclosure. As a non-limiting example, at least a portion of the processor 110 may be included in a first chip of the electronic device 100 and at least another portion of the processor 110 may be included in a second chip of the electronic device 100 different from the first chip of the electronic device 100.

For example, the processor 110 may comprise a central processing unit (CPU) 111, a graphics processing unit (GPU) 112, a neural processing unit (NPU) 113, an image signal processor (ISP) 114, a display controller 115, a memory controller 116, a storage controller 117, a communication processor (CP) 118, and/or a sensor interface 119. These components of the processor 110 are merely of an example. For example, the processor 110 may further comprise other components. For example, some components of the processor 110 may be omitted from the processor 110. For example, some components of the processor 110 may be included as separate components of the electronic device 100 outside the processor 110. For example, some components of the processor 110 (e.g., the memory controller 116) may be included in other components of the electronic device 100 (e.g., at least a portion of the memory 120, an interface (e.g., usable for connecting to at least one component of the electronic device 100), the display 140, and/or the image sensor 150).

The processor 110 may cause other components of the electronic device 100 to perform various operations by executing instructions stored in the memory 120. The CPU 111 (or a central processing circuitry) may be configured to control the components of the processor 110 based on execution of instructions stored in the memory 120 (e.g., the volatile memory 121 and/or the non-volatile memory 122). The GPU 112 (or a graphic processing circuitry) may be configured to execute parallel computations (e.g., rendering). The NPU 113 (or a neural processing circuitry, or an artificial intelligence (AI) chip) may be configured to execute operations (e.g., convolution computations) for an artificial intelligence model. The ISP 114 (or an image signal processing circuitry) may be configured to process a raw image obtained from the image sensor 150 in a format suitable for a component in the electronic device 100 or a component of the processor 110. The display controller 115 (or a display control circuitry, or a display processing unit (DPU)) may be configured to process an image obtained from the CPU 111, the GPU 112, the ISP 114, or the memory 120 (e.g., the volatile memory 121) in a format suitable for the display 140. The memory controller 116 (or a memory control circuitry) may be configured to control reading data from the volatile memory 121 and writing data to the volatile memory 121. The storage controller 117 (or a storage control circuitry) may be configured to control reading data from the non-volatile memory 122 and writing data to the non-volatile memory 122. The CP 118 (or a communication processing circuitry) may be configured to process data obtained from a component of the processor 110 in a format suitable for transmission to another electronic device via the communication circuitry 160, or to process data obtained from another electronic device via the communication circuitry 160 in a format suitable for processing of the component of the processor 110. For example, the communication circuitry 160 may comprise one or more communication circuitry. The sensor interface 119 (or a sensing data processing circuitry, a sensor hub) may be configured to process data on a state of the electronic device 100 and/or a state around the electronic device 100, obtained through the sensor 170, in a format suitable for a component of the processor 110.

The memory 120 may comprise one or more storage mediums (or one or more storage devices). For example, the memory 120 may include a memory assembly that includes one or more storage mediums. For example, the one or more storage mediums may comprise a permanent memory (e.g., the non-volatile memory 122) such as a hard drive, a flash memory, a read-only memory (ROM), a semi-permanent memory (e.g., the volatile memory 121) such as a random access memory (RAM), a storage (or a storage assembly) of any other suitable type, or any combination thereof. The memory 120 may comprise a cache memory which is a memory of one or more different types used to store data for performing a function or feature of the electronic device 100 at least temporarily. As a non-limiting example, the cache memory may be included in the processor 110. The memory 120 may be fixedly embedded within the electronic device 100, or may be incorporated onto one or more suitable types of components that may be repeatedly inserted into the electronic device 100, and removed from the electronic device 100 (e.g., a subscriber identity module (SIM) card, and/or a secure digital (SD) card).

For example, the memory 120 may store one or more software applications such as an operating system (or a system) software application, a firmware software application, a driver software application, a plug-in (e.g., add-in, add-on, and/or applet) software application, and/or any other suitable software application. For example, the one or more software applications may include instructions executable by the processor 110. For example, the memory 120 may store instructions callable by an application programming interface (API). For example, the memory 120 may store instructions in a library.

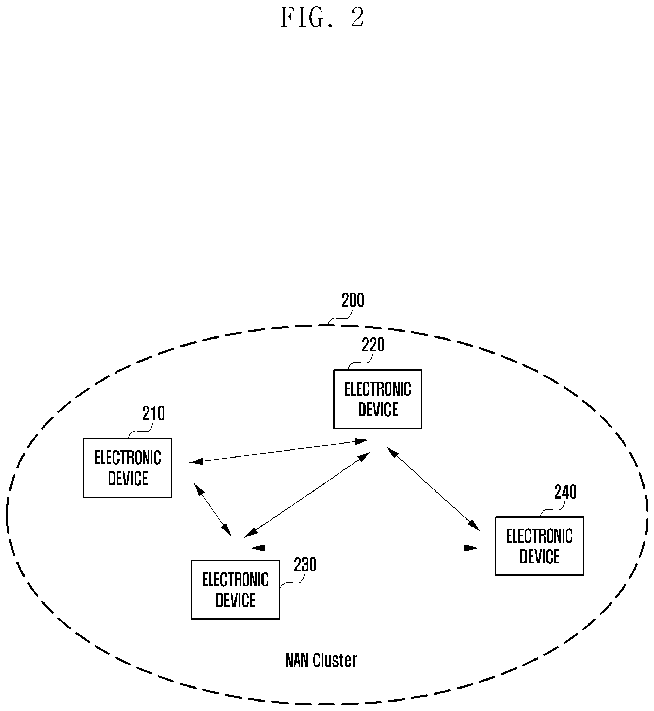

FIG. 2 is a diagram illustrating a neighbor awareness network (NAN) cluster according to various embodiments.

For example, FIG. 2 may illustrate an example configuration of a neighbor awareness networking (NAN) cluster 200 for a proximity network according to various embodiments. In the following description, the cluster 200 may refer to a set of electronic devices (or NAN devices) 210, 220, 230, and 240 (e.g., the electronic device 100 in FIG. 1) that constitute a proximity network so that the respective electronic devices 210, 220, 230, and 240 can transmit and receive data to and/or from each other. For example, the cluster 200 may be referred to as an NAN cluster in accordance with an NAN specification (or standard).

Referring to FIG. 2, the cluster 200 may include a plurality of electronic devices 210, 220, 230, and 240. The electronic devices 210, 220, 230, and 240 included in the cluster 200 may transmit and receive a beacon (or discovery beacon) and/or a service discovery frame (SDF) (hereinafter, referred to as "SDF") within a synchronized time duration (or communication period) (e.g., a discovery window (DW)).

The electronic devices 210, 220, 230, and 240 included in the cluster 200 may have their time clocks synchronized with each other. For example, the electronic devices 210, 220, 230, and 240 may be synchronized to the time clock of one electronic device (e.g., the electronic device 210) and exchange beacons and SDFs with each other in the same discovery window. This may have a beneficial technical effect in improving the efficiency of NAN cluster synchronization.

According to an embodiment, an electronic device that supports a low-power short-range communication technology based on NAN may broadcast a discovery signal (e.g., a beacon) to discover another electronic device every preconfigured first period (e.g., about 100 msec) and perform scanning every preconfigured second period (e.g., about 10 msec) to receive a discovery signal broadcast from another electronic device.

The electronic device 210, 220, 230, or 240 may detect at least one other electronic device located nearby, based on the discovery signal received through scanning, and perform NAN cluster synchronization with the detected at least one other electronic device. The NAN cluster synchronization may include an operation of receiving time clock information of an electronic device representing an NAN cluster so that electronic devices included in the NAN cluster transmit and/or receive data on the same channel and/or during the same time.

For example, as illustrated in FIG. 2, each of the plurality of electronic devices 210, 220, 230, and 240 may transmit and receive a beacon to and/or from other electronic devices 210, 220, 230, and 240, thereby forming the cluster 200 that operates according to a synchronized time clock, and the electronic devices 210, 220, 230, and 240 within the cluster 200 may perform NAN cluster synchronization.

The NAN cluster synchronization may be performed based on the time and channel of the electronic device with the highest master preference within the cluster 200. For example, the electronic devices 210, 220, 230, and 240 within the cluster 200 formed through discovery may exchange signals regarding master preference information indicating a preference for operating as an anchor master, and the electronic device with the highest master preference may be determined as the anchor master (or master electronic device) through the exchanged signals.

The anchor master may refer to an electronic device that serves as a reference for time and channel synchronization of the electronic devices 210, 220, 230, and 240 within the cluster 200. The anchor master may be changed according to the master preference of the electronic devices. Each of the time and channel synchronized electronic devices 210, 220, 230, and 240 may transmit a beacon and an SDF and receive beacons and SDFs from other electronic devices in the cluster 200 within a discovery window (or a discovery period) that is repeated according to a preconfigured cycle. According to an embodiment, the beacon may be periodically transmitted and received for each discovery window so that the time and channel synchronization of the electronic devices 210, 220, 230, and 240 in the cluster 200 is continuously maintained. The SDF may be transmitted and received during the discovery window as needed so that services with the discovered electronic devices 210, 220, 230, and 240 are provided. According to an embodiment, the electronic device operating as the anchor master among the time and channel synchronized electronic devices 210, 220, 230, and 240 may transmit a beacon to detect a new electronic device during the period between the discovery windows. This may have an advantageous technical effect in creating a more time-efficient discovery.

Each of the electronic devices 210, 220, 230, and 240 in the cluster 200 may operate in an active state only during the discovery window and operate in a low-power state (e.g., sleep state) during the remaining period other than the discovery window, thereby providing a beneficial technical effect of reducing current consumption.

For example, the discovery window is a period of time (e.g., milliseconds) during which an electronic device is active (or awake) and consumes a lot of current, whereas the period other than the discovery window allows low-power discovery because the electronic device remains in a sleep state.

The electronic devices 210, 220, 230, and 240 in the cluster 200 may be simultaneously activated at the start time (e.g., DW start) of the synchronized discovery window and simultaneously switched to a sleep state at the end time (e.g., DW end) of the discovery window.

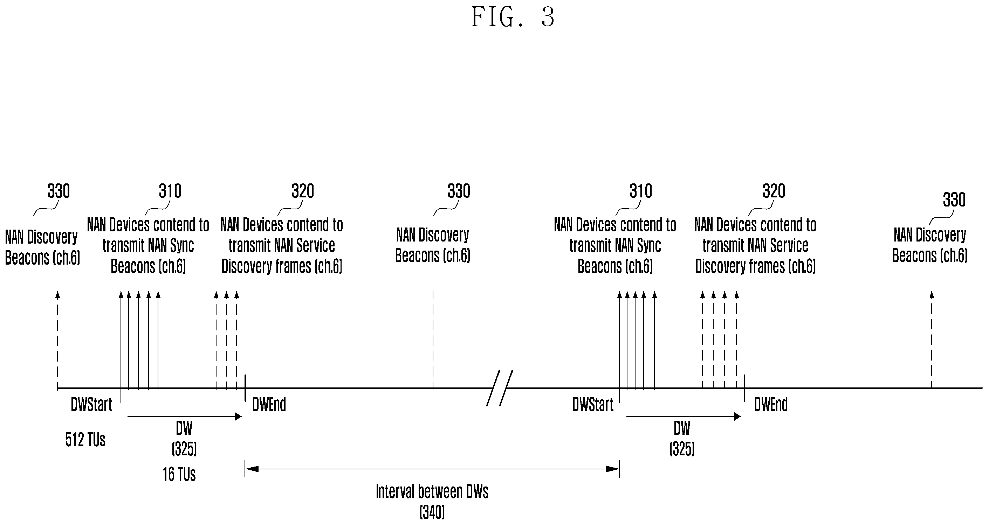

The electronic devices 210, 220, 230, and 240 included in the cluster 200 may perform discovery, synchronization, and data exchange operations, using a protocol illustrated in FIG. 3 described below.

FIG. 3 is a diagram illustrating a protocol for transmitting a signal of an electronic device included in an NAN cluster according to various embodiments of the disclosure.

For example, FIG. 3 may illustrate an example of a discovery window according to various embodiments. In an exemplary illustration of FIG. 3, electronic devices included in a single cluster transmit signals through a specific channel (e.g., channel 6 (Ch6)) based on an NAN standard.

Referring to FIG. 3, the electronic devices included in one cluster may transmit synchronization beacons 310 and SDFs 320 in a synchronized discovery window (DW) 325. In a period 340 other than the discovery window 325 (e.g., an interval between the discovery windows), at least one electronic device may transmit a discovery beacon 330. According to an embodiment, the electronic devices may transmit the synchronization beacons 310 and the SDFs 320, based on contention. For example, the synchronization beacons 310 and the SDFs 320 may be transmitted based on contention among the respective electronic devices belonging to the cluster.

The discovery window 325 may be a period during which the electronic devices are activated from a sleep state, which is a power saving mode, to a wake-up state for data exchange between the electronic devices. For example, the discovery window 325 may be distinguished by a time unit (TU) in milliseconds. According to an embodiment, the discovery window 325 for transmission/reception of the synchronization beacons 310 and the SDFs 320 may occupy 16 time units (16 TUs) and may have a cycle (or interval) that repeats as 512 time units (512 TUs). In other words, the start of each subsequent DW 325 may be spaced apart in time by 512 TUs.

The discovery beacon 330 may indicate a signal transmitted so that any other electronic device that has not joined the cluster can discover the cluster. For example, the discovery beacon 330 is a signal for notifying the cluster's presence, and electronic devices that do not participate in the cluster may perform a passive scan to receive the discovery beacon 330 and thereby discover and join the cluster.

The discovery beacon 330 may contain information necessary for synchronization with the cluster. For example, the discovery beacon 330 may include at least one of a frame control (FC) field indicating a function of a signal (e.g., a beacon), a broadcast address, a media access control (MAC) address of a transmitting electronic device, a cluster identifier (ID), a sequence control field, a time stamp for a beacon frame, a beacon interval indicating a transmission interval of the discovery beacon 330, or capability information on an electronic device transmitting the discovery beacon 330.

The discovery beacon 330 may include at least one proximity network (or cluster) related information element. In an embodiment, the proximity network related information may be referred to as attribute information.

The synchronization beacon 310 may indicate a signal for maintaining synchronization between the synchronized electronic devices in the cluster. The synchronization beacon 310 may be transmitted by a synchronization device among the electronic devices in the cluster. For example, the synchronization device may include an anchor master device, a master device, or a non-master sync device, which is defined in the NAN standard.

The synchronization beacon 310 may include information necessary for the electronic devices to synchronize within the cluster. For example, the synchronization beacon 310 may include at least one of an FC field indicating a function of a signal (e.g., a beacon), a broadcast address, a MAC address of a transmitting electronic device, a cluster identifier, a sequence control field, a time stamp for a beacon frame, a beacon interval indicating an interval between start points of the discovery windows 325, or capability information on the transmitting electronic device. According to an embodiment, the synchronization beacon 310 may include at least one proximity network (or cluster) related information element. For example, the proximity network related information may include contents for a service provided via the proximity network.

The SDF 320 may indicate a signal for exchanging data via the proximity network. According to an embodiment, the SDF 320 represents a vendor specific public action frame and may include various fields. For example, the SDF 320 may include a category or action field and may include at least one proximity network related information.

The synchronization beacon 310, the SDF 320, and the discovery beacon 330 may include proximity network related information. In an embodiment, the proximity network related information may include an identifier indicating a type of information, a length of information, and a body field which is corresponding information. In an embodiment, the corresponding information may include at least one of master indication information, cluster information, service identifier list information, service descriptor information, connectivity capability information, wireless LAN infrastructure information, peer-to-peer (P2P) operation information, independent basic service set (IBSS) information, mesh information, additional proximity network service discovery information, further availability map information, country code information, ranging information, cluster discovery information, or vendor specific information.

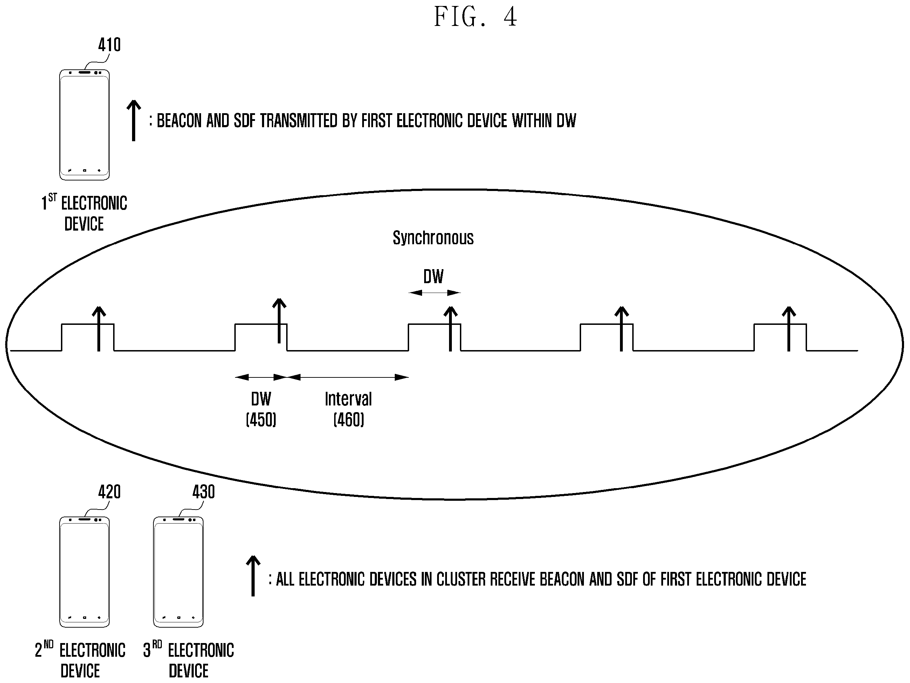

FIG. 4 is a diagram illustrating an example of data transmission and reception within an NAN cluster according to various embodiments of the disclosure.

For example, FIG. 4 illustrates an example in which a first electronic device 410, a second electronic device 420, and a third electronic device 430 form a single cluster through wireless short-range communication technology, and the respective electronic devices 410, 420, and 430 may transmit and receive a beacon and/or an SDF to and/or from each other. According to an embodiment, FIG. 4 illustrates an example in which the first electronic device 410 among the electronic devices 410, 420, and 430 constituting the cluster performs the role of a master electronic device.

Referring to FIG. 4, the first electronic device 410 may transmit the beacon and the SDF within a discovery window 450. The first electronic device 410 may broadcast the beacon and the SDF every discovery window 450 that is repeated according to a preconfigured period (e.g., interval 460).

The second electronic device 420 and the third electronic device 430 may receive the beacon and the SDF transmitted by the first electronic device 410. According to an embodiment, each of the second electronic device 420 and the third electronic device 430 may receive the beacon and the SDF broadcast from the first electronic device 410 every discovery window 450.

The beacon transmitted within the discovery window 450 may include a synchronization beacon and may include information for maintaining synchronization among the electronic devices 410, 420 and 430. For example, the second electronic device 420 and/or the third electronic device 430 may perform NAN cluster synchronization, based on time clock information of the first electronic device 410 included in the beacon transmitted by the first electronic device 410 operating as a master. The second electronic device 420 and/or the third electronic device 430 may be synchronized, and thereby the discovery window 450 may be activated at the same time.

In a period (e.g., the interval 460) other than the discovery window 450, the electronic devices 410, 420, and 430 may maintain a sleep state to reduce current consumption. For example, the electronic devices 410, 420, and 430 may reduce current consumption by operating in a wake state only during the discovery window 450, based on a synchronized time clock, providing a beneficial technical effect in more efficient battery usage.

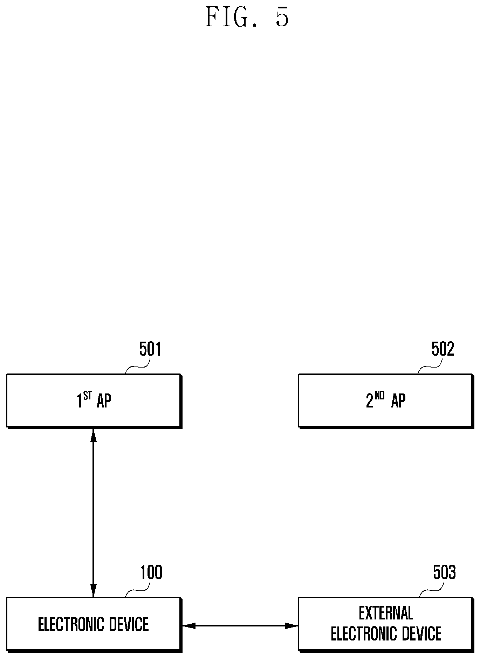

FIG. 5 is a diagram illustrating an electronic device, an external electronic device, and at least one AP according to an embodiment.

An electronic device 100 (e.g., the electronic device 100 in FIG. 1, the electronic device 410, 420, or 430 in FIG. 4) and an external electronic device 503 (e.g., the electronic device 100 in FIG. 1, the electronic device 410, 420, or 430 in FIG. 4) may be included in the same NAN cluster (e.g., the NAN cluster 200 in FIG. 2).

A first AP 501 may be an entity that performs the role of an access point defined in IEEE 802.11, and may transmit data, transmitted by the electronic device 100 via short-range wireless communication, to the outside, and may transmit data, received from the outside, to the electronic device 100 via short-range wireless communication. A second AP 502 may be an entity that performs the role of an access point defined in IEEE 802.11, and may transmit data, transmitted by the electronic device 100 via short-range wireless communication, to the outside, and may transmit data, received from the outside, to the electronic device 100 via short-range wireless communication.

The electronic device 100 may be connected to the first AP 501 through short-range wireless communication.

According to an example, the second AP 502 may support a dynamic frequency selection (DFS). The DFS may refer to a technology that enables short-range wireless communication through a DFS channel, which is a channel used for various purposes (e.g., military purposes or weather observation purposes). The DFS channel may have a relatively lower congestion (or channel utilization) than other channels, and the performance of short-range wireless communication via the DFS channel may be higher than the performance of short-range wireless communication via other channels.

According to an example, the second AP 502 supporting the DFS may detect (or, identify, monitor) a radar signal other than a short-range wireless communication signal. When the radar signal is not detected, the second AP 502 may provide short-range wireless communication to the electronic device 100 and/or the external electronic device 503 via the DFS channel. When the radar signal is detected, the second AP 502 may control the electronic device 100 and/or the external electronic device 503 to perform short-range wireless communication by changing to a channel different from the DFS channel. A signal requesting a change from the DFS channel to any other channel may be included in a clear to send (CTS) frame. When connected to the second AP 502, the electronic device 100 may perform short-range wireless communication via the DFS channel, and upon receiving a signal requesting a change from the DFS channel to other (another) channel from the second AP 502, it may change from the DFS channel to other (another) channel and perform short-range wireless communication through the other (another) channel.

The first AP 501 may be connected to the electronic device 100 through a channel (non-DFS channel) other than the DFS channel. The non-DFS channel may refer to a channel that can maintain a connection between the electronic device 100 and the first AP 501 regardless of detection of the radar signal.

The external electronic device 503 may be connected to the electronic device 100 through device-to-device communication. The device-to-device communication may refer to communication that allows direct connection between devices without going through an AP. According to an example, the external electronic device 503 may be connected to the electronic device 100 through Wi-Fi direct. According to another example, the external electronic device 503 may be connected to the electronic device 100 via neighbor awareness networking (NAN) communication.

Recently, Wi-Fi Direct has defined a standard that supports the DFS channel. According to an example, the electronic device 100 and the external electronic device 503 may perform Wi-Fi Direct through the DFS channel. If at least one of the electronic device 100 and the external electronic device 503 is connected to a DFS owner (e.g., the second AP 502) that refers to an AP capable of detecting the radar signal, and both the electronic device 100 and the external electronic device 503 are capable of receiving a signal transmitted from the DFS owner (e.g., a signal indicating (or requesting) a change in an operating channel according to detection of the radar signal), they may perform Wi-Fi Direct through the DFS channel.

According to an example, the electronic device 100 may transmit information related to the DFS channel (e.g., information indicating whether the second AP 502 connectable to the electronic device 100 supports the DFS, and/or information indicating the DFS channel connected between the electronic device 100 and the second AP 502) to the external electronic device 503. The external electronic device 503 may receive the information related to the DFS channel and identify (or scan) whether it can receive a signal being transmitted from the second AP 502 included in the information related to the DFS channel through each of a plurality of DFS channels. If the external electronic device 503 discovers (or identifies) a channel capable of receiving the signal transmitted from the second AP 502, it may transmit information indicating the discovered channel to the electronic device 100. If the discovered channel is the same as a channel between the electronic device 100 and the second AP 502, the electronic device 100 may perform a series of configurations so that Wi-Fi Direct can be performed through the DFS channel.

However, if the electronic device 100 and the external electronic device 503 are not connected to the second AP 502 that supports the DFS, wireless communication between devices may not be performed through the DFS channel. According to an example, if the electronic device 100 and/or the external electronic device 503 are/is connected, through the non-DFS channel, to the first AP 501 that does not support the DFS, the electronic device 100 and the external electronic device 503 may perform device-to-device communication (e.g., NAN communication, Wi-Fi Direct) through the non-DFS channel. In order to simultaneously perform short-range wireless communication using the first AP 501 and device-to-device communication with the external electronic device 503, the electronic device 100 may configure a channel established between the electronic device 100 and the external electronic device 503 and a channel established between the first AP 501 and the electronic device 100 to be the same. If the electronic device 100 and the external electronic device 503 support a wider bandwidth than the bandwidth of the channel (or, non-DFS channel) established between the first AP 501 and the electronic device 100, the electronic device 100 and the external electronic device 503 may perform device-to-device communication through the non-DFS channel even though they can perform device-to-device communication using the wider bandwidth. As (e.g., when; while) the electronic device 100 and the external electronic device 503 perform device-to-device communication via the non-DFS channel, it may cause limitations in transmission speed and/or reception speed.

Hereinafter, examples will be described in which the electronic device 100 and the external electronic device 503 perform device-to-device communication using a bandwidth wider (e.g., larger; broader) than the bandwidth of the channel between the electronic device 100 and the first AP 501.

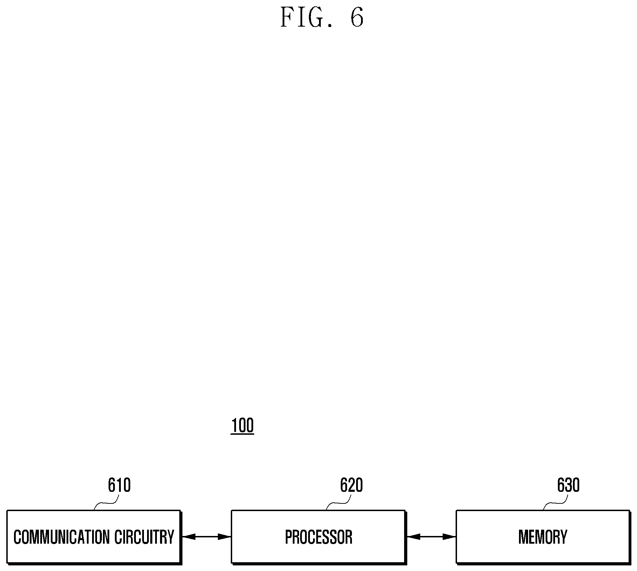

FIG. 6 is a block diagram of an electronic device according to an embodiment.

According to an embodiment, an electronic device (e.g., the electronic device 100 in FIG. 5) may include a communication circuitry 610 (e.g., the wireless communication module 192 in FIG. 1), a processor 620 (e.g., the processor 120 in FIG. 1), and/or a memory 630.

The communication circuitry 610 may be a communication circuitry that supports neighbor awareness network (NAN) communication and peer-to-peer (P2P) communication different from the NAN communication. The P2P communication different from the NAN communication may refer to communication capable of performing direct communication between electronic devices without going through an AP. According to an example, the P2P communication may include Wi-Fi Direct.

The communication circuitry 610 may include various circuitry structures used for modulating and/or demodulating signals within the electronic device 100. For example, the communication circuitry 610 may modulate a baseband signal into a radio frequency (RF) band signal to be output through an antenna (not shown), or demodulate an RF band signal received through a same or another antenna into a baseband signal and transmit it to the processor 620.

The processor 620 may perform an operation of receiving data transmitted from an application processor (e.g., the processor 120 in FIG. 1) and generating a packet to transmit the received data. The processor 620 may be defined as an application and/or a communication processor included in a communication module (e.g., the wireless communication module 192 in FIG. 1). The processor 620 may be electrically and/or operatively connected to the communication circuitry 610 and may control the communication circuitry 610.

The memory 630 may store instructions that may be executed by the processor 620. The operation of the processor 620 described below may be performed according to the execution of instructions stored in the memory 630.

The processor 620 may be connected via short-range wireless communication to an AP (e.g., the first AP 501 in FIG. 5) that does not support a dynamic frequency selection (DFS). Alternatively, the processor 620 may be connected via a non-DFS channel to an AP (e.g., the first AP 501 in FIG. 5) that supports the DFS. The DFS may refer to a technology that enables short-range wireless communication via a DFS channel, which is a channel used for various purposes (e.g., military purposes or weather observation purposes). The DFS channel may have relatively lower congestion (or channel utilization) than other channels, and the performance of short-range wireless communication via the DFS channel may be higher than the performance of short-range wireless communication via other channels.

The processor 620 may activate NAN communication. According to an example, the processor 620 may activate NAN communication when data transmission and/or reception via NAN communication is required, when a service or application related to data transmission and/or reception via NAN communication is activated, and/or when a user input for performing data transmission and/or reception via NAN communication is received. In other words; the processor 620 may be configured to activate NAN communication in response to receiving user input.

The processor 620 may activate NAN communication in a state where short-range wireless communication is activated. Alternatively, the processor 620 may activate short-range wireless communication and NAN communication at substantially the same time.

The processor 620 may be configured to control the communication circuitry (610) to discover an electronic device (e.g., the external electronic device 503 in FIG. 5A) capable of performing NAN communication, as a part of an operation of activating NAN communication. The processor 620 may be configured to control the communication circuitry 610 to transmit a first service discovery frame to the external electronic device 503.

The first service discovery frame may include information related to negotiation for activating NAN communication between the electronic device 100 and the external electronic device 503. According to an example, the first service discovery frame may include information of the electronic device 100, performance information of the electronic device 100 (e.g., information indicating the maximum bandwidth that the electronic device 100 can support), and/or identification information of a service related to NAN communication.

The first service discovery frame may include information related to the first AP 501 connected to the electronic device 100 via short-range wireless communication. The information related to the first AP 501 may include information indicating whether the first AP 501 supports the DFS, identification information (e.g., SSID, BSSID) of the first AP 501, and/or information indicating the non-DFS channel between the electronic device 100 and the first AP 501.

The first service discovery frame may include information related to the DFS channel. The information related to the DFS channel may include information indicating whether a second AP (e.g., the second AP 502 in FIG. 5) discovered by the electronic device 100 through a scanning operation supports the DFS, information related to the second AP 502 (e.g., identification information (e.g., SSID, BSSID) of the second AP 502), and/or information indicating the DFS channel connectable between the electronic device 100 and the second AP 502.

The information related to the DFS channel may include information indicating whether the electronic device 100 supports NAN communication using the DFS channel. If the electronic device 100 supports NAN communication using the DFS channel, an NDP may be established through the DFS channel, and the electronic device 100 and the external electronic device 503 may perform NAN communication through the DFS channel.

The first service discovery frame may include information indicating whether a function of allowing connection of the electronic device 100 to at least two APs (e.g., the first AP 501 and the second AP 502) via short-range wireless communication is supported. The function of allowing connection of the electronic device 100 to at least two APs (e.g., the first AP 501 and the second AP 502) via short-range wireless communication may refer to a function in which, while the electronic device 100 is connected to the first AP 501 via short-range wireless communication and performs data transmission and/or reception, it can also be connected to the second AP 502 via short-range wireless communication and perform data transmission and/or reception. According to an example, the function of allowing connection of the electronic device 100 to at least two APs (e.g., the first AP 501 and the second AP 502) via short-range wireless communication may be referred to as a dual STA interface support function.

The processor 620 may receive a second service discovery frame from the external electronic device 503 in the process of discovering an external electronic device (e.g., the external electronic device 503 in FIG. 5) capable of performing NAN communication.

The second service discovery frame may include information related to negotiation for activating NAN communication between the electronic device 100 and the external electronic device 503. According to an example, the second service discovery frame may include information of the external electronic device 503, performance information of the external electronic device 503 (e.g., information indicating the maximum bandwidth that the external electronic device 503 can support), and/or identification information of a service related to NAN communication.

The second service discovery frame may include information related to the DFS channel. The information related to the DFS channel may include information indicating whether a second AP (e.g., the second AP 502 in FIG. 5) discovered by the external electronic device 503 through a scanning operation supports the DFS, information related to the second AP 502 (e.g., identification information (e.g., SSID, BSSID) of the second AP 502), and/or information indicating the DFS channel connectable between the external electronic device 503 and the second AP 502.

The information related to the DFS channel may include information indicating whether the external electronic device 503 supports NAN communication using the DFS channel. If the external electronic device 503 supports NAN communication using the DFS channel, an NDP may be established through the DFS channel, and the electronic device 100 and the external electronic device 503 may perform NAN communication through the DFS channel.

The second service discovery frame may include information indicating whether a function of allowing connection of the external electronic device 503 to at least two APs (e.g., the first AP 501 and the second AP 502) via short-range wireless communication is supported. The function of allowing connection of the external electronic device 503 to at least two APs (e.g., the first AP 501 and the second AP 502) via short-range wireless communication may refer to a function in which, while the external electronic device 503 is connected to the first AP 501 via short-range wireless communication and performs data transmission and/or reception, it can also be connected to the second AP 502 via short-range wireless communication and perform data transmission and/or reception. According to an example, the function of allowing connection of the external electronic device 503 to at least two APs (e.g., the first AP 501 and the second AP 502) via short-range wireless communication may be referred to as a dual STA interface support function.

The processor 620 may receive the second service discovery frame from the external electronic device 503 and, based on the second service discovery frame, identify whether the external electronic device 503 supports the DFS. The processor 620 may identify whether the external electronic device 503 supports the DFS, based on the DFS channel related information included in the second service discovery frame.

The processor 620 may identify the maximum bandwidth that the external electronic device 503 can support, based on the second service discovery frame. The processor 620 may identify the maximum bandwidth that the external electronic device 503 can support, based on the performance information of the external electronic device 503 included in the second service discovery frame.

If the external electronic device 503 supports the DFS, and the maximum bandwidth that the external electronic device 503 can support is greater than a bandwidth of a channel established between the electronic device 100 and the first AP 501, the processor 620 may perform an operation of connecting to the second AP 502 supporting the DFS through the DFS channel. If the electronic device 100 supports a function of being connectable to at least two APs via short-range wireless communication, the processor 620 may control the communication circuitry 610 to perform a connection to the second AP 502 through the DFS channel while maintaining a connection between the first AP 501 and the electronic device 100 through the non-DFS channel.

According to an example, the second AP 502 supporting the DFS may detect (or, identify, monitor) a radar signal which is not a signal of short-range wireless communication. If the radar signal is not detected, the second AP 502 may provide short-range wireless communication to the electronic device 100 via the DFS channel. If the radar signal is detected, the second AP 502 may control the electronic device 100 to perform short-range wireless communication by changing to a channel different from the DFS channel. A signal requesting a change from the DFS channel to any other channel may be included in a clear to send (CTS) frame. The electronic device 100 may perform short-range wireless communication via the DFS channel, and upon receiving a signal requesting a change from the DFS channel to other channel from the second AP 502, it may change from the DFS channel to other channel and perform short-range wireless communication through the other channel.

After completing a connection with the second AP 502 through the DFS channel (or while performing a connection procedure with the second AP 502 through the DFS channel), the processor 620 may perform a procedure for establishing (or configuring, generating) an NDP with the external electronic device 503, based on the first service discovery frame and/or the second service discovery frame. The processor 620 may generate (or configure) first schedule information related to performing NAN communication, as at least a part of the operation for establishing the NDP with the external electronic device 503.

The first schedule information may refer to information that allows the electronic device 100 and the external electronic device 503 to perform NAN communication through the frequency band of the non-DFS channel and the frequency band of the DFS channel during a first period which is at least a portion of an interval (e.g., the interval 460) between discovery windows (e.g., the discovery windows 450 in FIG. 4). The first period may be referred to as a further available window (FAW), considering that it is an additional period during which NAN communication is possible, other than the discovery window 450 defined in the NAN cluster.

Since the electronic device 100 and the external electronic device 503 may perform data transmission and/or reception through the frequency band of the DFS channel and the frequency band of the non-DFS channel, the processor 620 may configure (or generate) the first schedule information so that the electronic device 100 and the external electronic device 503 may perform NAN communication through the frequency band of the non-DFS channel and the frequency band of the DFS channel during the first period which is at least a portion of the interval 460 between the discovery windows 450.

The processor 620 may configure the first schedule information so that the electronic device 100 and the external electronic device 503 may perform NAN communication through the non-DFS channel and the DFS channel during the first period which is at least a portion of the interval 460 between the discovery windows 450. According to an example, if other channels (e.g., channels 106, 122, and 138 in the 5 GHz band) exist between the non-DFS channel (e.g., channel 155 in the 5 GHz band) and the DFS channel (e.g., channel 58 in the 5 GHz band), the processor 620 may configure the first schedule information so that the NAN communication may be performed through at least two channels (e.g., the non-DFS channel and the DFS channel).

The processor 620 may configure the first schedule information so that the electronic device 100 and the external electronic device 503 may perform NAN communication through any other channel (e.g., channel 50 in the 5 GHz band) including the frequency band of the non-DFS channel (e.g., channel 42 in the 5 GHz band) and the frequency band of the DFS channel (e.g., channel 58 in the 5 GHz band) during the first period which is at least a portion of the interval 460 between the discovery windows 450. According to an example, if there is no other channel between the non-DFS channel (e.g., channel 42 in the 5 GHz band) and the DFS channel (e.g., channel 58 in the 5 GHz band), the processor 620 may configure the first schedule information so that NAN communication can be performed through other (another) channel including the frequency band of the non-DFS channel and the frequency band of the DFS channel.

By configuring the first schedule information to perform NAN communication based on the frequency band of the non-DFS channel and the frequency band of the DFS channel, the processor 620 can increase the bandwidth of a channel used to perform NAN communication, and can improve the performance of device-to-device communication as the bandwidth of the channel increases. For example, by expanding the (transmission) bandwidth to simultaneously utilize both non-DFS and DFS frequency bands, transmission speeds may be improved.

According to an example, the first schedule information may be configured to allow the electronic device 100 and the external electronic device 503 to perform NAN communication through the frequency band of the non-DFS channel (e.g., a channel between the first AP 501 and the electronic device 100) and the frequency band of the DFS channel during the first period of the interval 460 between the discovery windows 450, and to perform NAN communication through the frequency band of any other non-DFS channel, which is different from the channel between the first AP 501 and the electronic device 100, and the frequency band of the DFS channel during the second period of the interval 460 between the discovery windows 450. The other non-DFS channel may be the same as a channel (e.g., channel 155 in the 5 GHz band) allocated to perform NAN communication in a cluster including the electronic device 100 and the external electronic device 503.

The processor 620 may be configured to perform short-range wireless communication with the second AP 502 through the DFS channel during the first period, and perform short-range wireless communication with the first AP 501 through the non-DFS channel during the second period.

According to an example, the first schedule information may be configured to allow the electronic device 100 and the external electronic device 503 to perform NAN communication through the frequency band of the non-DFS channel (e.g., the channel between the first AP 501 and the electronic device 100) and the frequency band of the DFS channel during the interval 460 (or during the first period and the second period) between the discovery windows 450.

During the interval between the discovery windows 450, the processor 620 may perform short-range wireless communication with the second AP 502 through the DFS channel and perform short-range wireless communication with the first AP 501 through the non-DFS channel.

According to an example, the first schedule information may be configured to allow the electronic device 100 and the external electronic device 503 to perform NAN communication through the frequency band of the non-DFS channel (e.g., the channel between the first AP 501 and the electronic device 100) and the frequency band of the DFS channel during the first period of the interval 460 between the discovery windows 450, and to perform NAN communication through the non-DFS channel different from the channel between the first AP 501 and the electronic device 100 during the second period, different from the first period, of the interval 460. The processor 620 may configure the first schedule information to refrain from (or prohibit) performing NAN communication using the DFS channel during the second period.

The processor 620 may be configured to perform short-range wireless communication with the second AP 502 through the DFS channel during the first period.

According to an example, the processor 620 may be configured to identify that the second service discovery frame received from the external electronic device 503 does not include information related to the DFS channel.

According to an example, if the external electronic device 503 is not connected to the second AP 502 supporting the DFS through short-range wireless communication, the external electronic device 503 may identify (or scan) whether it can receive a signal being transmitted from the second AP 502 included in the information related to the DFS channel through each of a plurality of DFS channels, and transmit the service discovery frame including the identifying result (e.g., discovering a channel capable of receiving a signal transmitted from the second AP 502) to the electronic device 100. The processor 620 may identify the information related to the DFS channel included in the service discovery frame, and determine whether the external electronic device 503 can perform NAN communication through the DFS channel.

However, the time taken for the external electronic device 503 to identify whether it can receive the signal being transmitted from the second AP 502 included in the information related to the DFS channel through each of the plurality of DFS channels may take up a large proportion of the time taken to establish NAN communication. As the time taken to identify whether the signal being transmitted from the second AP 502 included in the information related to the DFS channel can be received through each of the plurality of DFS channels increases, the time taken to establish NAN communication may increase, and the delay time related to activating the service through NAN communication may increase.

In order to resolve the (disadvantageous) phenomenon described above, the processor 620 may establish an NDP with the external electronic device 503 through the non-DFS channel rather than the DFS channel if the second service discovery frame received from the external electronic device 503 does not include the DFS channel related information. The processor 620 may generate (or configure) second schedule information related to performing NAN communication as at least a part of the operation of establishing the NDP with the external electronic device 503.

The second schedule information may refer to information that allows the electronic device 100 and the external electronic device 503 to perform NAN communication through the non-DFS channel (e.g., a default NDP channel configured for the cluster including the electronic device 100 and the external electronic device 503) during at least a portion of the interval (e.g., the interval 460) between the discovery windows (e.g., the discovery windows 450 in FIG. 4). According to an example, the processor 620 may generate (or configure) the second schedule information to perform NAN communication during a portion of the interval 460 between the discovery windows 450. This portion of the interval may be referred to as a further available window (FAW), considering that it is an additional period during which NAN communication is possible, other than the discovery window 450 defined in the NAN cluster.

According to an example, the second schedule information may refer to information that allows the electronic device 100 and the external electronic device 503 to perform short-range wireless communication during a period other than a portion of the interval 460 between the discovery windows 450. The other period may be referred to as an unaligned window (ULW), considering a characteristic of performing short-range wireless communication, other than NAN communication, between the discovery windows 450. According to an example, the processor 420 may configure the second schedule information so that the electronic device 100 may perform short-range wireless communication through the non-DFS channel established between the electronic device 100 and the first AP 501.

The processor 620 may establish the NDP through the non-DFS channel and perform NAN communication with the external electronic device 503 based on the second schedule information related to performing NAN communication. The processor 620 may control the communication circuitry 610 to perform NAN communication with the external electronic device 503 during a portion of the period between the discovery windows 450, and control the communication circuitry 610 to perform short-range wireless communication with the first AP 501 during the other portion of the period between the discovery windows 450.

After establishing the NDP (or while performing the NAN communication), the processor 620 may receive, from the external electronic device 503, information indicating that a signal transmitted by the second AP 502 can be received through the DFS channel.

According to an example, after establishing the NDP (or while performing the NAN communication), the external electronic device 503 may identify (or scan) whether it can receive the signal being transmitted from the second AP 502, based on the information related to the DFS channel transmitted by the electronic device 100. If determining (e.g., having determined; having assured) that the signal transmitted by the second AP 502 can be received through the DFS channel, the external electronic device 503 may transmit, to the electronic device 100, a signal (or message, frame) indicating that the signal transmitted by the second AP 502 can be received through the DFS channel.

According to an example, after establishing the NDP (or while performing the NAN communication), the processor 620 may control the communication circuitry 610 to transmit, to the external electronic device 503, a request signal (or message, frame) to request identifying whether the external electronic device 503 can receive a signal from the second AP 502 through the DFS channel. Before transmission of the request signal, the processor 620 may be connected to the second AP 502 supporting the DFS through short-range wireless communication.

Upon receiving the request signal, the external electronic device 503 may identify (or scan) whether the signal transmitted by the second AP 502 can be received, based on information related to the DFS channel included in the request signal or the service discovery frame. The external electronic device 503 may transmit, to the electronic device 100, a response signal indicating that the signal transmitted by the second AP 502 can be received through the DFS channel.

According to an example, after establishing the NDP (or while performing the NAN communication), the processor 620 may not transmit, to the external electronic device 503, the request signal (or message, frame) to request identifying whether the external electronic device 503 can receive a signal from the second AP 502 through the DFS channel. If the information related to the DFS channel is included in the service discovery frame received from the electronic device 100 before the establishment of the NDP, the external electronic device 503 may identify (or scan) whether it can receive a signal being transmitted from the second AP 502, based on the information related to the DFS channel included in the service discovery frame, after establishing the NDP (or while performing the NAN communication).

The processor 620 may transmit the DFS channel related information including information indicating the DFS channel between the electronic device 100 and the second AP 502 to the external electronic device 503. Instead of performing scanning for a plurality of DFS channels, the external electronic device 503 may identify whether it can receive a signal being transmitted from the second AP 502 through the DFS channel included in the DFS channel related information. The request signal may prevent the external electronic device 503 from performing an operation of identifying whether it can receive a signal being transmitted from the second AP 502 through a DFS channel different from the DFS channel included in the request signal. Therefore, presenting a technical advantage, the electronic device 100 can significantly reduce the time required for configuring the NDP through the DFS channel.

After establishing the NDP (or while performing the NAN communication), if the processor 620 receives, from the external electronic device 503, information indicating that the signal transmitted by the second AP 502 can be received through the DFS channel, the processor 620 may change (or update) the second schedule information. In an embodiment, the processor 620 may change (or update) the second schedule information so that the NAN communication can be performed through the DFS channel and the non-DFS channel. According to an example, upon identifying that the external electronic device 503 can receive the signal being transmitted from the second AP 502 through the DFS channel, the processor 620 may control the communication circuitry 610 to perform the NAN communication based on the first schedule information.

Although it is described in the above examples that the electronic device 100 is connected to the first AP 501 through the non-DFS channel and to the second AP 502 through the DFS channel, it may be implemented, in an embodiment, that the external electronic device 503 rather than the electronic device 100 is connected to the second AP 502 through the DFS channel.

The processor 620 may identify whether the external electronic device 503 is connectable to the second AP 502, based on the second service discovery frame received from the external electronic device 503. According to an example, upon (e.g., in response to; when) identifying that there is no AP connected to the external electronic device 503 through short-range wireless communication, the processor 620 may determine that the external electronic device 503 is connectable to the second AP 502. According to an example, the processor 620 may identify whether the external electronic device 503 supports a function capable of connecting to at least two APs via short-range wireless communication. Upon (e.g., in response to; when) identifying that the external electronic device 503 supports the function capable of connecting to at least two APs via short-range wireless communication, the processor 620 may determine that the external electronic device 503 is connectable to the second AP 502.

If the external electronic device 503 is connectable to the second AP 502, the processor 620 may request the external electronic device 503 to be connected to the second AP 502 via the DFS channel. According to an example, the processor 620 may control the communication circuitry 610 to transmit, to the external electronic device 503, a signal requesting the external electronic device 503 to activate the function capable of connecting to at least two APs via short-range wireless communication. When the external electronic device 503 activates the function capable of connecting to at least two APs through short-range wireless communication, the processor 620 may request the external electronic device 503 to be connected to the second AP 502 through the DFS channel. When the external electronic device 503 is connected to the second AP 502 through the DFS channel, the processor 620 may control the communication circuitry 610 to perform NAN communication based on the first schedule information.

Based on the second service discovery frame received from the external electronic device 503, the processor 620 may identify whether the external electronic device 503 supports the function capable of connecting to at least two APs via short-range wireless communication. If the external electronic device 503 supports the function capable of connecting to at least two APs via short-range wireless communication, the processor 620 may control the communication circuitry 610 to transmit, the external electronic device 503, a signal requesting the external electronic device 503 to activate the function capable of connecting to at least two APs via short-range wireless communication. If the external electronic device 503 activates the function capable of connecting to at least two APs via short-range wireless communication, the processor 620 may request the external electronic device 503 to be connected to the second AP 502 via the DFS channel. If the external electronic device 503 is connected to the second AP 502 via the DFS channel, the processor 620 may control the communication circuitry 610 to perform NAN communication based on the first schedule information.

The examples described above are examples related to NAN communication. However, the electronic device 100 may also apply the above-described examples to Wi-Fi Direct. For example, the electronic device 100 may be connected to the first AP 501 through the non-DFS channel, and connected to the external electronic device 503 through Wi-Fi Direct. The electronic device 100 may be connected to the external electronic device 503 using the same channel as the non-DFS channel between the electronic device 100 and the first AP 501. The electronic device 100 may be connected to the second AP 502 through the DFS channel, and connected to the external electronic device 503 through the non-DFS channel and the DFS channel to perform Wi-Fi Direct.

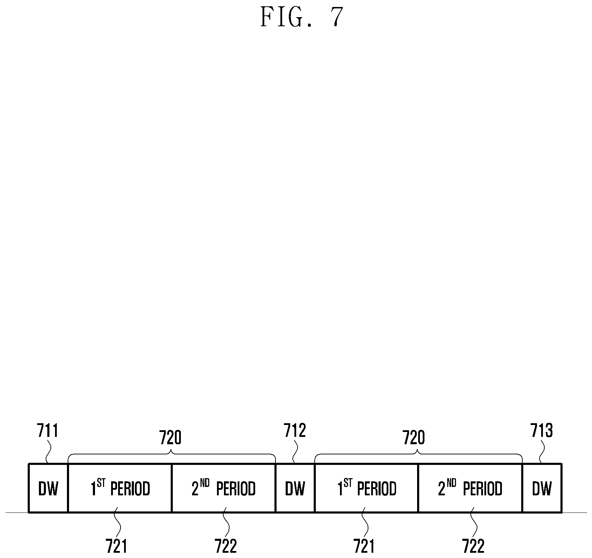

FIG. 7 is a diagram illustrating first schedule information for performing NAN communication through a frequency band of a non-DFS channel and a frequency band of a DFS channel by an electronic device according to an embodiment.

The first schedule information may refer to information that allows the electronic device 100 and the external electronic device 503 to perform NAN communication through the frequency band of the non-DFS channel and the frequency band of the DFS channel during a first period 721 which is at least a portion of a period 720 (e.g., the interval 460) between discovery windows 711, 712, and 713 (e.g., the discovery windows 450 in FIG. 4). The first period 721 may be referred to as a further available window (FAW), considering that it is an additional period during which NAN communication is possible, other than the discovery window 450 defined in the NAN cluster.

Since the electronic device 100 and the external electronic device 503 may perform data transmission and/or reception through the frequency band of the DFS channel and the frequency band of the non-DFS channel, the electronic device 100 may configure (or generate) the first schedule information so that the electronic device 100 and the external electronic device 503 may perform NAN communication through the frequency band of the non-DFS channel and the frequency band of the DFS channel during the first period 721 which is at least a portion of the interval 720 between the discovery windows 711, 712, and 713. The interval 720 between the discovery windows may be an interval between discovery windows 711 and 712 and/or an interval between discovery windows 712 and 713.

According to an example, the electronic device 100 may configure the first schedule information to allow the electronic device 100 and the external electronic device 503 to perform NAN communication through the frequency band of the DFS channel and the frequency band of the non-DFS channel during the first period 721 between the discovery windows 711, 712, and 713, to perform short-range wireless communication with the first AP 501 through the frequency band of the non-DFS channel during the first period 721, and to perform short-range wireless communication with the second AP 502 through the frequency band of the DFS channel during the first period 721.

The electronic device 100 may configure the first schedule information so that the electronic device 100 and the external electronic device 503 may perform NAN communication through the non-DFS channel and the DFS channel during the first period 721 which is at least a portion of the interval 720 between the discovery windows 711, 712, and 713. According to an example, if other channels (e.g., channels 106, 122, 138 in the 5 GHz band) exist between the non-DFS channel (e.g., channel 155 in the 5 GHz band) and the DFS channel (e.g., channel 58 in the 5 GHz band), the processor 620 may configure the first schedule information so that the NAN communication may be performed through at least two channels (e.g., the non-DFS channel and the DFS channel).

The electronic device 100 may configure the first schedule information so that the electronic device 100 and the external electronic device 503 may perform NAN communication through any other channel (e.g., channel 50 in the 5 GHz band) including the frequency band of the non-DFS channel (e.g., channel 42 in the 5 GHz band) and the frequency band of the DFS channel (e.g., channel 58 in the 5 GHz band) during the first period 721 which is at least a portion of the interval 720 between the discovery windows 711, 712, and 713. According to an example, if there is no other channel between the non-DFS channel (e.g., channel 42 in the 5 GHz band) and the DFS channel (e.g., channel 58 in the 5 GHz band), the processor 620 may configure the first schedule information so that NAN communication can be performed through other (another) channel including the frequency band of the non-DFS channel and the frequency band of the DFS channel.

By configuring the first schedule information to perform NAN communication based on the frequency band of the non-DFS channel and the frequency band of the DFS channel, the electronic device 100 can increase the bandwidth of a channel used to perform NAN communication, and can improve the performance of device-to-device communication as the bandwidth of the channel increases.

According to an example, the first schedule information may be configured to allow the electronic device 100 and the external electronic device 503 to perform NAN communication through the frequency band of the non-DFS channel (e.g., a channel between the first AP 501 and the electronic device 100) and the frequency band of the DFS channel during the first period 721 of the interval 720 between the discovery windows 711, 712, and 713, and to perform NAN communication through the frequency band of any other non-DFS channel, which is different from the channel between the first AP 501 and the electronic device 100, and the frequency band of the DFS channel during the second period 722 of the interval 720 between the discovery windows 711, 712, and 713. The other non-DFS channel may be the same as a channel (e.g., channel 155 in the 5 GHz band) allocated to perform NAN communication in a cluster including the electronic device 100 and the external electronic device 503.

According to an example, the first schedule information may be configured to allow the electronic device 100 and the external electronic device 503 to perform NAN communication through the frequency band of the non-DFS channel (e.g., the channel between the first AP 501 and the electronic device 100) and the frequency band of the DFS channel during the interval 720 between the discovery windows 711, 712, and 713.

The processor 620 may control the communication circuitry 610 to perform short-range wireless communication with the second AP 502 through the DFS channel during the interval 720 between the discovery windows 711, 712, and 713, and perform short-range wireless communication with the first AP 501 through the non-DFS channel.

According to an example, the first schedule information may be configured to allow the electronic device 100 and the external electronic device 503 to perform NAN communication through the frequency band of the non-DFS channel (e.g., the channel between the first AP 501 and the electronic device 100) and the frequency band of the DFS channel during the first period 721 of the interval 720 between discovery windows 711, 712, and 713, and to perform NAN communication through the non-DFS channel, different from the channel between the first AP 501 and the electronic device 100, during the second period 722, different from the first period 711, of the interval 720. The electronic device 100 may configure the first schedule information to refrain from (or prohibit) performing NAN communication using the DFS channel during the second period 722.

The electronic device 100 may control the communication circuitry 610 to transmit a service discovery frame (or schedule request frame) including the first schedule information to the external electronic device 503. The external electronic device 503 may receive the first schedule information and, based on the first schedule information, perform NAN communication and/or short-range wireless communication.

The electronic device 100 may generate the schedule information illustrated in FIG. 7 and transmit the service discovery frame including the schedule information to the external electronic device 503. The schedule information may be included in a NAN availability attribute, and the NAN availability attribute may include a start time of the first period 721, a duration and/or a periodicity of the first period 721, a start time of the second period 722, and a duration and/or a periodicity of the second period 722.

The first period 721 may correspond to one further available window (FAW), and the second period 722 may correspond to a FAW different from the FAW corresponding to the first period 721.

The electronic device 100 may configure the periodicity of the first period 721 and the second period 722 to be substantially the same as the periodicity of the discovery windows 711, 712, and 713, but there is no limitation. In an embodiment, the electronic device 100 may configure the periodicity of the first period 721 and the second period 722 to be substantially different from the periodicity of the discovery windows 711, 712, and 713.

The electronic device 100 may configure the duration of the first period 721 and the second period 722 to be the same, but there is no limitation. In an embodiment, the electronic device 100 may configure the duration of the first period 721 and the second period 722 to be substantially different.

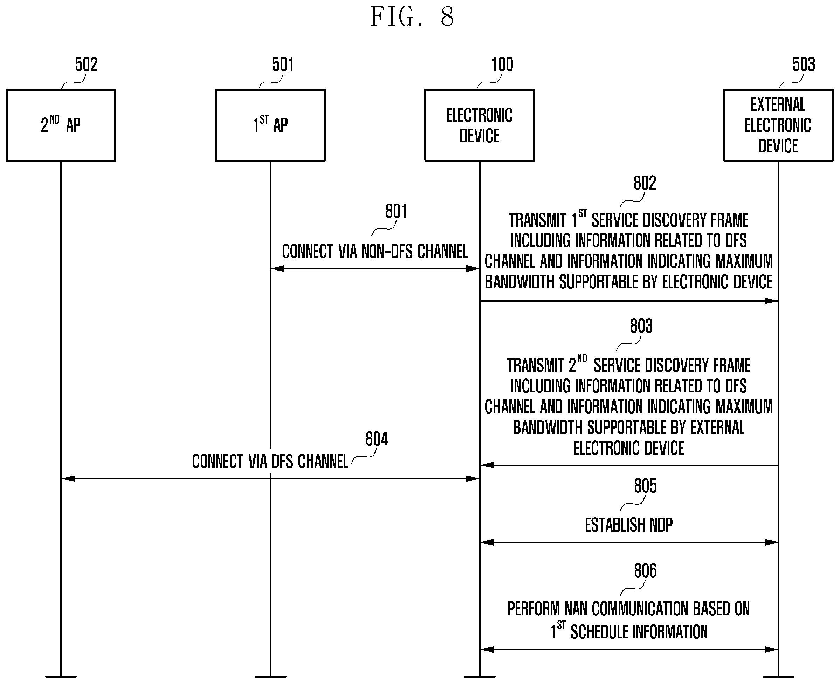

FIG. 8 is a drawing illustrating an example of the electronic device performing NAN communication based on first schedule information related to NAN communication through the frequency band of the non-DFS channel and the frequency band of the DFS channel according to an embodiment.

In operation 801, an electronic device (e.g., the electronic device 100 in FIG. 6) and a first AP (e.g., the first AP 501 in FIG. 5) may be connected through a non-DFS channel.

The electronic device 100 may be connected via short-range wireless communication to an AP (e.g., the first AP 501 in FIG. 5) that does not support a dynamic frequency selection (DFS). Alternatively, the electronic device 100 may be connected via a non-DFS channel to an AP (e.g., the first AP 501 in FIG. 5) that supports the DFS. The DFS may refer to a technology that enables short-range wireless communication via a DFS channel, which is a channel used for various purposes (e.g., military purposes or weather observation purposes). The DFS channel may have relatively lower congestion (or channel utilization) than other channels, and the performance of short-range wireless communication via the DFS channel may be higher than the performance of short-range wireless communication via other channels.

In operation 802, the electronic device 100 may transmit, to an external electronic device (e.g., the external electronic device 503 in FIG. 5), a first service discovery frame including information related to the DFS channel and information indicating a maximum bandwidth supportable by the electronic device 100.

The electronic device 100 may activate NAN communication. According to an example, the electronic device 100 may activate NAN communication when data transmission and/or reception via NAN communication is required, when a service or application related to data transmission and/or reception via NAN communication is activated, and/or when a user input for performing data transmission and/or reception via NAN communication is received.

The electronic device 100 may activate NAN communication in a state where short-range wireless communication is activated. Alternatively, the electronic device 100 may activate the short-range wireless communication and the NAN communication at substantially the same time.

The electronic device 100 may discover an electronic device (e.g., the external electronic device 503 in FIG. 5) capable of performing NAN communication, as a part of an operation of activating the NAN communication. The electronic device 100 may control the communication circuitry 610 to transmit a first service discovery frame to the external electronic device 503.

The first service discovery frame may include information related to negotiation for activating NAN communication between the electronic device 100 and the external electronic device 503. According to an example, the first service discovery frame may include information of the electronic device 100, performance information of the electronic device 100 (e.g., information indicating the maximum bandwidth supportable by the electronic device 100), and/or identification information of a service related to NAN communication.

The first service discovery frame may include information related to the first AP 501 connected to the electronic device 100 via short-range wireless communication. The information related to the first AP 501 may include information indicating whether the first AP 501 supports the DFS, identification information (e.g., SSID, BSSID) of the first AP 501, and/or information indicating the non-DFS channel between the electronic device 100 and the first AP 501.

The first service discovery frame may include information related to the DFS channel. The information related to the DFS channel may include information indicating whether a second AP (e.g., the second AP 502 in FIG. 5) discovered by the electronic device 100 through a scanning operation supports the DFS, information related to the second AP 502 (e.g., identification information (e.g., SSID, BSSID) of the second AP 502), and/or information indicating the DFS channel connectable between the electronic device 100 and the second AP 502.

The information related to the DFS channel may include information indicating whether the electronic device 100 supports NAN communication using the DFS channel. If the electronic device 100 supports NAN communication using the DFS channel, an NDP may be established through the DFS channel, and the electronic device 100 and the external electronic device 503 may perform NAN communication through the DFS channel.

The first service discovery frame may include information indicating whether a function of allowing connection of the electronic device 100 to at least two APs (e.g., the first AP 501 and the second AP 502) via short-range wireless communication is supported. The function of allowing connection of the electronic device 100 to at least two APs (e.g., the first AP 501 and the second AP 502) via short-range wireless communication may refer to a function in which, while the electronic device 100 is connected to the first AP 501 via short-range wireless communication and performs data transmission and/or reception, it can also be connected to the second AP 502 via short-range wireless communication and perform data transmission and/or reception. According to an example, the function of allowing connection of the electronic device 100 to at least two APs (e.g., the first AP 501 and the second AP 502) via short-range wireless communication may be referred to as a dual STA interface support function.

In operation 803, the external electronic device 503 may transmit, to the electronic device 100, a second service discovery frame that includes information related to the DFS channel and information indicating the maximum bandwidth supportable by the external electronic device 503.

The electronic device 100 may receive the second service discovery frame from the external electronic device 503. The electronic device 100 may receive the second service discovery frame from the external electronic device 503 in the process of discovering the external electronic device 503 capable of performing NAN communication.

The second service discovery frame may include information related to negotiation for activating NAN communication between the electronic device 100 and the external electronic device 503. According to an example, the second service discovery frame may include information of the external electronic device 503, performance information of the external electronic device 503 (e.g., information indicating the maximum bandwidth supportable by the external electronic device 503), and/or identification information of a service related to NAN communication.

The second service discovery frame may include information related to the DFS channel. The information related to the DFS channel may include information indicating whether a second AP (e.g., the second AP 502 in FIG. 5) discovered by the external electronic device 503 through a scanning operation supports the DFS, information related to the second AP 502 (e.g., identification information (e.g., SSID, BSSID) of the second AP 502), and/or information indicating the DFS channel connectable between the external electronic device 503 and the second AP 502.

The information related to the DFS channel may include information indicating whether the external electronic device 503 supports NAN communication using the DFS channel. If the external electronic device 503 supports NAN communication using the DFS channel, an NDP may be established through the DFS channel, and the electronic device 100 and the external electronic device 503 may perform NAN communication through the DFS channel.

The second service discovery frame may include information indicating whether a function of allowing connection of the external electronic device 503 to at least two APs (e.g., the first AP 501 and the second AP 502) via short-range wireless communication is supported. The function of allowing connection of the external electronic device 503 to at least two APs (e.g., the first AP 501 and the second AP 502) via short-range wireless communication may refer to a function in which, while the external electronic device 503 is connected to the first AP 501 via short-range wireless communication and performs data transmission and/or reception, it can also be connected to the second AP 502 via short-range wireless communication and perform data transmission and/or reception. According to an example, the function of allowing connection of the external electronic device 503 to at least two APs (e.g., the first AP 501 and the second AP 502) via short-range wireless communication may be referred to as a dual STA interface support function.

In operation 804, the electronic device 100 may be connected to the second AP 502 through the DFS channel. In other words, the electronic device 100 may connect to the second AP 502 via the DFS channel.

The electronic device 100 may receive the second service discovery frame from the external electronic device 503 and, based on the second service discovery frame, identify whether the external electronic device 503 supports the DFS. The electronic device 100 may identify whether the external electronic device 503 supports the DFS, based on the DFS channel related information included in the second service discovery frame.

The electronic device 100 may identify the maximum bandwidth supportable by the external electronic device 503, based on the second service discovery frame. The electronic device 100 may identify the maximum bandwidth supportable by the external electronic device 503, based on the performance information of the external electronic device 503 included in the second service discovery frame.

If the external electronic device 503 supports the DFS, and the maximum bandwidth supportable by the external electronic device 503 is greater than a bandwidth of a channel established between the electronic device 100 and the first AP 501, the electronic device 100 may perform an operation of connecting to the second AP 502 supporting the DFS through the DFS channel. If the electronic device 100 supports a function of being connectable to at least two APs via short-range wireless communication, the electronic device 100 may control the communication circuitry 610 to perform a connection to the second AP 502 through the DFS channel while maintaining a connection between the first AP 501 and the electronic device 100 through the non-DFS channel.

According to an example, the second AP 502 supporting the DFS may detect (or, identify, monitor) a radar signal which is not a signal of short-range wireless communication. If the radar signal is not detected, the second AP 502 may provide short-range wireless communication to the electronic device 100 via the DFS channel. If the radar signal is detected, the second AP 502 may control the electronic device 100 to perform short-range wireless communication by changing to a channel different from the DFS channel. A signal requesting a change from the DFS channel to any other channel may be included in a clear to send (CTS) frame. The electronic device 100 may perform short-range wireless communication via the DFS channel, and upon receiving a signal requesting a change from the DFS channel to other channel from the second AP 502, it may change from the DFS channel to other channel and perform short-range wireless communication through the other channel.

In operation 805, the electronic device 100 and the external electronic device 503 may establish an NDP. In other words, the electronic device 100 may establish the NDP with the external electronic device 503.

After completing a connection with the second AP 502 through the DFS channel (or while performing a connection procedure with the second AP 502 through the DFS channel), the electronic device 100 may perform a procedure for establishing (or configuring, generating) the NDP with the external electronic device 503, based on the first service discovery frame and/or the second service discovery frame. The electronic device 100 may generate (or configure) first schedule information related to performing NAN communication, as at least a part of the operation for establishing the NDP with the external electronic device 503.

The first schedule information may refer to information that allows the electronic device 100 and the external electronic device 503 to perform NAN communication through the frequency band of the non-DFS channel and the frequency band of the DFS channel during a first period which is at least a portion of an interval (e.g., the interval 460) between discovery windows (e.g., the discovery windows 450 in FIG. 4). The first period may be referred to as a further available window (FAW), considering that it is an additional period during which NAN communication is possible, other than the discovery window 450 defined in the NAN cluster.

Since the electronic device 100 and the external electronic device 503 may perform data transmission and/or reception through the frequency band of the DFS channel and the frequency band of the non-DFS channel, the electronic device 100 may configure (or generate) the first schedule information so that the electronic device 100 and the external electronic device 503 may perform NAN communication through the frequency band of the non-DFS channel and the frequency band of the DFS channel during the first period which is at least a portion of the interval 460 between the discovery windows 450.

The electronic device 100 may configure the first schedule information so that the electronic device 100 and the external electronic device 503 may perform NAN communication through the non-DFS channel and the DFS channel during the first period which is at least a portion of the interval 460 between the discovery windows 450. According to an example, if other channels (e.g., channels 106, 122, and 138 in the 5 GHz band) exist between the non-DFS channel (e.g., channel 155 in the 5 GHz band) and the DFS channel (e.g., channel 58 in the 5 GHz band), the electronic device 100 may configure the first schedule information so that the NAN communication may be performed through at least two channels (e.g., the non-DFS channel and the DFS channel).

The electronic device 100 may configure the first schedule information so that the electronic device 100 and the external electronic device 503 may perform NAN communication through any other channel (e.g., channel 50 in the 5 GHz band) including the frequency band of the non-DFS channel (e.g., channel 42 in the 5 GHz band) and the frequency band of the DFS channel (e.g., channel 58 in the 5 GHz band) during the first period which is at least a portion of the interval 460 between the discovery windows 450. According to an example, if there is no other channel between the non-DFS channel (e.g., channel 42 in the 5 GHz band) and the DFS channel (e.g., channel 58 in the 5 GHz band), the electronic device 100 may configure the first schedule information so that NAN communication can be performed through other channel including the frequency band of the non-DFS channel and the frequency band of the DFS channel.

By configuring the first schedule information to perform NAN communication based on the frequency band of the non-DFS channel and the frequency band of the DFS channel, the electronic device 100 can increase the bandwidth of a channel used to perform NAN communication, and can improve the performance of device-to-device communication as the bandwidth of the channel increases.

According to an example, the first schedule information may be configured to allow the electronic device 100 and the external electronic device 503 to perform NAN communication through the frequency band of the non-DFS channel (e.g., a channel between the first AP 501 and the electronic device 100) and the frequency band of the DFS channel during the first period of the interval 460 between the discovery windows 450, and to perform NAN communication through the frequency band of any other non-DFS channel, which is different from the channel between the first AP 501 and the electronic device 100, and the frequency band of the DFS channel during the second period of the interval 460 between the discovery windows 450. The other non-DFS channel may be the same as a channel (e.g., channel 155 in the 5 GHz band) allocated to perform NAN communication in a cluster including the electronic device 100 and the external electronic device 503.

The electronic device 100 may perform short-range wireless communication with the first AP 501 through the non-DFS channel during the first period, and perform short-range wireless communication with the second AP 502 through the DFS channel during the second period.

According to an example, the first schedule information may be configured to allow the electronic device 100 and the external electronic device 503 to perform NAN communication through the frequency band of the non-DFS channel (e.g., the channel between the first AP 501 and the electronic device 100) and the frequency band of the DFS channel during the interval 460 (or during the first period and the second period) between the discovery windows 450.

During the interval between the discovery windows 450, the electronic device 100 may perform short-range wireless communication with the second AP 502 through the DFS channel and perform short-range wireless communication with the first AP 501 through the non-DFS channel.

According to an example, the first schedule information may be configured to allow the electronic device 100 and the external electronic device 503 to perform NAN communication through the frequency band of the non-DFS channel (e.g., the channel between the first AP 501 and the electronic device 100) and the frequency band of the DFS channel during the first period of the interval 460 between the discovery windows 450, and to perform NAN communication through the non-DFS channel different from the channel between the first AP 501 and the electronic device 100 during the second period, different from the first period, of the interval 460. The electronic device 100 may configure the first schedule information to refrain from (or prohibit) performing NAN communication using the DFS channel during the second period.

The electronic device 100 may perform short-range wireless communication with the second AP 502 through the DFS channel during the first period.

In operation 806, the electronic device 100 and the external electronic device 503 may perform NAN communication, based on the first schedule information. In other words, the electronic device 100 may perform NAN communication with the external electronic device 503 based on the first schedule information related to performing the NAN communication.

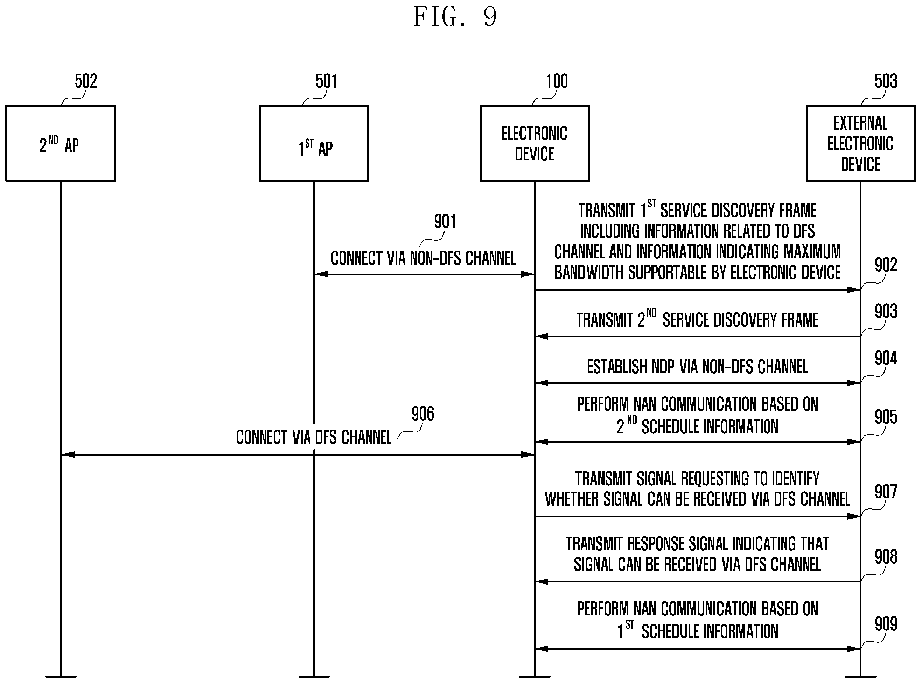

FIG. 9 is a diagram illustrating an example of performing NAN communication based on first schedule information related to NAN communication through the frequency band of the non-DFS channel and the frequency band of the DFS channel by the electronic device according to one embodiment.

In operation 901, an electronic device (e.g., the electronic device 100 in FIG. 6) and a first AP (e.g., the first AP 501 in FIG. 5) may be connected through a non-DFS channel.

The electronic device 100 may be connected via short-range wireless communication to an AP (e.g., the first AP 501 in FIG. 5) that does not support a dynamic frequency selection (DFS). Alternatively, the electronic device 100 may be connected via a non-DFS channel to an AP (e.g., the first AP 501 in FIG. 5) that supports the DFS. The DFS may refer to a technology that enables short-range wireless communication via a DFS channel, which is a channel used for various purposes (e.g., military purposes or weather observation purposes). The DFS channel may have relatively lower congestion (or channel utilization) than other channels, and the performance of short-range wireless communication via the DFS channel may be higher than the performance of short-range wireless communication via other channels.

In operation 902, the electronic device 100 may transmit, to an external electronic device (e.g., the external electronic device 503 in FIG. 5), a first service discovery frame including information related to the DFS channel and information indicating a maximum bandwidth supportable by the electronic device 100.

The electronic device 100 may activate NAN communication. According to an example, the electronic device 100 may activate NAN communication when data transmission and/or reception via NAN communication is required, when a service or application related to data transmission and/or reception via NAN communication is activated, and/or when a user input for performing data transmission and/or reception via NAN communication is received.

The electronic device 100 may activate NAN communication in a state where short-range wireless communication is activated. Alternatively, the electronic device 100 may activate the short-range wireless communication and the NAN communication at substantially the same time.

The electronic device 100 may discover an electronic device (e.g., the external electronic device 503 in FIG. 5) capable of performing NAN communication, as a part of an operation of activating the NAN communication. The electronic device 100 may control the communication circuitry 610 to transmit a first service discovery frame to the external electronic device 503.

The first service discovery frame may include information related to negotiation for activating NAN communication between the electronic device 100 and the external electronic device 503. According to an example, the first service discovery frame may include information of the electronic device 100, performance information of the electronic device 100 (e.g., information indicating the maximum bandwidth supportable by the electronic device 100), and/or identification information of a service related to NAN communication.

The first service discovery frame may include information related to the first AP 501 connected to the electronic device 100 via short-range wireless communication. The information related to the first AP 501 may include information indicating whether the first AP 501 supports the DFS, identification information (e.g., SSID, BSSID) of the first AP 501, and/or information indicating the non-DFS channel between the electronic device 100 and the first AP 501.

The first service discovery frame may include information related to the DFS channel. The information related to the DFS channel may include information indicating whether a second AP (e.g., the second AP 502 in FIG. 5) discovered by the electronic device 100 through a scanning operation supports the DFS, information related to the second AP 502 (e.g., identification information (e.g., SSID, BSSID) of the second AP 502), and/or information indicating the DFS channel connectable between the electronic device 100 and the second AP 502.

The information related to the DFS channel may include information indicating whether the electronic device 100 supports NAN communication using the DFS channel. If the electronic device 100 supports NAN communication using the DFS channel, an NDP may be established through the DFS channel, and the electronic device 100 and the external electronic device 503 may perform NAN communication through the DFS channel.

The first service discovery frame may include information indicating whether a function of allowing connection of the electronic device 100 to at least two APs (e.g., the first AP 501 and the second AP 502) via short-range wireless communication is supported. The function of allowing connection of the electronic device 100 to at least two APs (e.g., the first AP 501 and the second AP 502) via short-range wireless communication may refer to a function in which, while the electronic device 100 is connected to the first AP 501 via short-range wireless communication and performs data transmission and/or reception, it can also be connected to the second AP 502 via short-range wireless communication and perform data transmission and/or reception. According to an example, the function of allowing connection of the electronic device 100 to at least two APs (e.g., the first AP 501 and the second AP 502) via short-range wireless communication may be referred to as a dual STA interface support function.

In operation 903, the external electronic device 503 may transmit a second service discovery frame to the electronic device 100.

According to an example, the electronic device 100 may identify that the second service discovery frame received from the external electronic device 503 does not include information related to the DFS channel.

According to an example, if the external electronic device 503 is not connected to the second AP 502 supporting the DFS through short-range wireless communication, the external electronic device 503 may identify (or scan) whether it can receive a signal being transmitted from the second AP 502 included in the information related to the DFS channel through each of a plurality of DFS channels, and transmit the service discovery frame including the identifying result (e.g., discovering a channel capable of receiving a signal transmitted from the second AP 502) to the electronic device 100. The electronic device 100 may identify the information related to the DFS channel included in the service discovery frame, and determine whether the external electronic device 503 can perform NAN communication through the DFS channel.

However, the time taken for the external electronic device 503 to identify whether it can receive the signal being transmitted from the second AP 502 included in the information related to the DFS channel through each of the plurality of DFS channels may take up a large proportion of the time taken to establish NAN communication. As the time taken to identify whether the signal being transmitted from the second AP 502 included in the information related to the DFS channel can be received through each of the plurality of DFS channels increases, the time taken to establish NAN communication may increase, and the delay time related to activating the service through NAN communication may increase.

In operation 904, the electronic device 100 and the external electronic device 503 may establish the NDP through the non-DFS channel.

In order to resolve the phenomenon described above, the electronic device 100 may establish the NDP with the external electronic device 503 through the non-DFS channel rather than the DFS channel if the second service discovery frame received from the external electronic device 503 does not include the DFS channel related information.

The electronic device 100 may generate (or configure) second schedule information related to performing NAN communication, as at least a part of the operation of establishing the NDP with the external electronic device 503.

The second schedule information may refer to information that allows the electronic device 100 and the external electronic device 503 to perform NAN communication through the non-DFS channel (e.g., a default NDP channel configured for the cluster including the electronic device 100 and the external electronic device 503) during at least a portion of the interval (e.g., the interval 460) between the discovery windows (e.g., the discovery windows 450 in FIG. 4). According to an example, the electronic device 100 may generate (or configure) the second schedule information to perform NAN communication during a portion of the interval 460 between the discovery windows 450. This portion of the interval may be referred to as a further available window (FAW), considering that it is an additional period during which NAN communication is possible, other than the discovery window 450 defined in the NAN cluster.

According to an example, the second schedule information may refer to information that allows the electronic device 100 and the external electronic device 503 to perform short-range wireless communication during a period other than a portion of the interval 460 between the discovery windows 450. The other period may be referred to as an unaligned window (ULW), considering the characteristic of performing short-range wireless communication, other than NAN communication, between the discovery windows 450. According to an example, the processor 420 may configure the second schedule information so that the electronic device 100 may perform short-range wireless communication through the non-DFS channel established between the electronic device 100 and the first AP 501.

In operation 905, the electronic device 100 and the external electronic device 503 may perform NAN communication based on the second schedule information.

The electronic device 100 may establish the NDP through the non-DFS channel and perform NAN communication with the external electronic device 503 based on the second schedule information related to performing NAN communication. The electronic device 100 may control the communication circuitry 610 to perform NAN communication with the external electronic device 503 during a portion of the period between the discovery windows 450, and control the communication circuitry 610 to perform short-range wireless communication with the first AP 501 during the other portion of the period between the discovery windows 450.

In operation 906, the electronic device 100 may be connected to the second AP 502 through the DFS channel.

The electronic device 100 may perform a series of operations to enable the external electronic device 503 and the electronic device 100 to perform NAN communication through the frequency band of the DFS channel and the frequency band of the non-DFS channel while performing NAN communication based on the second schedule information. The electronic device 100 may be connected to the second AP 502 supporting the DFS through the DFS channel before transmitting a request signal described below in operation 907.

In operation 907, the electronic device 100 may transmit, to the external electronic device 503, a signal requesting to identify whether the external electronic device 503 can receive a signal through the DFS channel.

According to an example, after establishing the NDP (or while performing the NAN communication), the external electronic device 503 may identify (or scan) whether it can receive the signal being transmitted from the second AP 502, based on the information related to the DFS channel transmitted by the electronic device 100. If determining that the signal transmitted by the second AP 502 can be received through the DFS channel, the external electronic device 503 may transmit, to the electronic device 100, a signal (or message, frame) indicating that the signal transmitted by the second AP 502 can be received through the DFS channel.

According to an example, after establishing the NDP (or while performing the NAN communication), the electronic device 100 (i.e. the processor 620) may control the communication circuitry 610 to transmit, to the external electronic device 503, a request signal (or message, frame) to request identifying whether the external electronic device 503 can receive a signal from the second AP 502 through the DFS channel.

In operation 908, the external electronic device 503 may transmit, to the electronic device 100, a response signal indicating that it can receive a signal through the DFS channel.

Upon (e.g., in response to; when) receiving the request signal, the external electronic device 503 may identify (or scan) whether the signal transmitted by the second AP 502 can be received, based on information related to the DFS channel included in the request signal or the service discovery frame. The external electronic device 503 may transmit, to the electronic device 100, a response signal indicating that the signal transmitted by the second AP 502 can be received through the DFS channel.

According to an example, after establishing the NDP (or while performing the NAN communication), the electronic device 100 may not transmit, to the external electronic device 503, the request signal (or message, frame) to request identifying whether the external electronic device 503 can receive a signal from the second AP 502 through the DFS channel. If the information related to the DFS channel is included in the service discovery frame received from the electronic device 100 before the establishment of the NDP, the external electronic device 503 may identify (or scan) whether it can receive a signal being transmitted from the second AP 502, based on the information related to the DFS channel included in the service discovery frame, after establishing the NDP (or while performing the NAN communication).

The electronic device 100 may transmit the DFS channel related information including information indicating the DFS channel between the electronic device 100 and the second AP 502 to the external electronic device 503. Instead of performing scanning for a plurality of DFS channels, the external electronic device 503 may identify whether it can receive a signal being transmitted from the second AP 502 through the DFS channel included in the DFS channel related information. The request signal may prevent the external electronic device 503 from performing an operation of identifying whether it can receive a signal being transmitted from the second AP 502 through a DFS channel different from the DFS channel included in the request signal. Therefore, the electronic device 100 can significantly reduce the time required for configuring the NDP through the DFS channel.

In operation 909, the electronic device 100 and the external electronic device 503 may perform NAN communication, based on the first schedule information.

After establishing the NDP (or while performing the NAN communication), if the electronic device 100 receives, from the external electronic device 503, information indicating that the signal transmitted by the second AP 502 can be received through the DFS channel, the electronic device 100 may change (or update) the second schedule information. The electronic device 100 may change (or update) the second schedule information so that the NAN communication can be performed through the DFS channel and the non-DFS channel. According to an example, upon identifying that the external electronic device 503 can receive the signal being transmitted from the second AP 502 through the DFS channel, the electronic device 100 may control the communication circuitry 610 to perform the NAN communication based on the first schedule information.

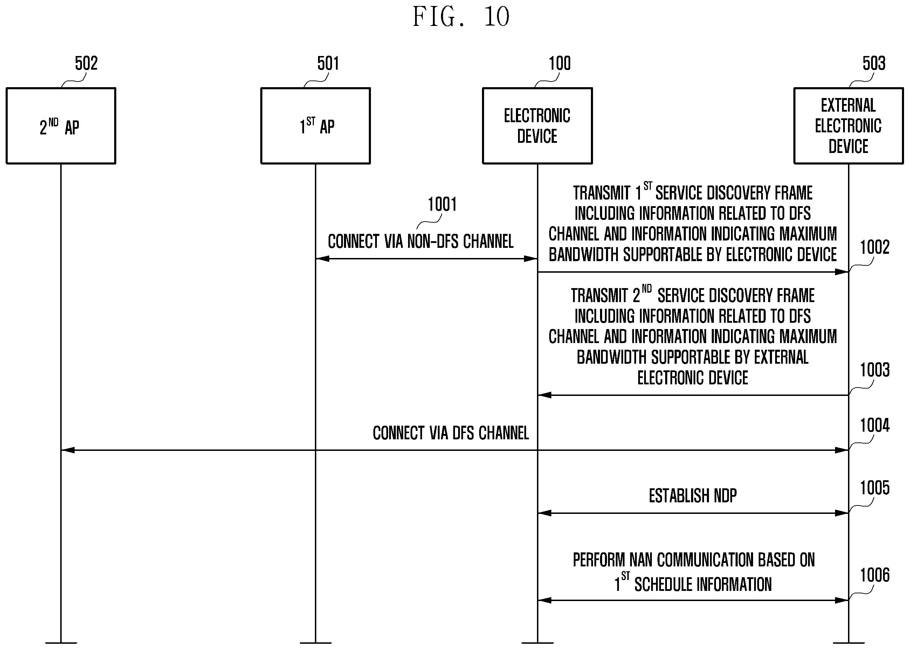

FIG. 10 is a diagram illustrating an example of performing NAN communication based on first schedule information related to NAN communication through a frequency band of a non-DFS channel and a frequency band of a DFS channel by an electronic device according to one embodiment.

In operation 1001, an electronic device (e.g., the electronic device 100 in FIG. 6) and a first AP (e.g., the first AP 501 in FIG. 5) may be connected through a non-DFS channel.

The electronic device 100 may be connected via short-range wireless communication to an AP (e.g., the first AP 501 in FIG. 5) that does not support a dynamic frequency selection (DFS). Alternatively, the electronic device 100 may be connected via a non-DFS channel to an AP (e.g., the first AP 501 in FIG. 5) that supports the DFS. The DFS may refer to a technology that enables short-range wireless communication via a DFS channel, which is a channel used for various purposes (e.g., military purposes or weather observation purposes). The DFS channel may have relatively lower congestion (or channel utilization) than other channels, and the performance of short-range wireless communication via the DFS channel may be higher than the performance of short-range wireless communication via other channels.

In operation 1002, the electronic device 100 may transmit, to an external electronic device (e.g., the external electronic device 503 in FIG. 5), a first service discovery frame including information related to the DFS channel and information indicating a maximum bandwidth supportable by the electronic device 100.

The electronic device 100 may activate NAN communication. According to an example, the electronic device 100 may activate NAN communication when data transmission and/or reception via NAN communication is required, when a service or application related to data transmission and/or reception via NAN communication is activated, and/or when a user input for performing data transmission and/or reception via NAN communication is received.

The electronic device 100 may activate NAN communication in a state where short-range wireless communication is activated. Alternatively, the electronic device 100 may activate the short-range wireless communication and the NAN communication at substantially the same time.

The electronic device 100 may discover an electronic device (e.g., the external electronic device 503 in FIG. 5) capable of performing NAN communication, as a part of an operation of activating the NAN communication. The electronic device 100 may control the communication circuitry 610 to transmit a first service discovery frame to the external electronic device 503.

The first service discovery frame may include information related to negotiation for activating NAN communication between the electronic device 100 and the external electronic device 503. According to an example, the first service discovery frame may include information of the electronic device 100, performance information of the electronic device 100 (e.g., information indicating the maximum bandwidth supportable by the electronic device 100), and/or identification information of a service related to NAN communication.

The first service discovery frame may include information related to the first AP 501 connected to the electronic device 100 via short-range wireless communication. The information related to the first AP 501 may include information indicating whether the first AP 501 supports the DFS, identification information (e.g., SSID, BSSID) of the first AP 501, and/or information indicating the non-DFS channel between the electronic device 100 and the first AP 501.

The first service discovery frame may include information related to the DFS channel. The information related to the DFS channel may include information indicating whether a second AP (e.g., the second AP 502 in FIG. 5) discovered by the electronic device 100 through a scanning operation supports the DFS, information related to the second AP 502 (e.g., identification information (e.g., SSID, BSSID) of the second AP 502), and/or information indicating the DFS channel connectable between the electronic device 100 and the second AP 502.

The information related to the DFS channel may include information indicating whether the electronic device 100 supports NAN communication using the DFS channel. If the electronic device 100 supports NAN communication using the DFS channel, an NDP may be established through the DFS channel, and the electronic device 100 and the external electronic device 503 may perform NAN communication through the DFS channel.

The first service discovery frame may include information indicating whether a function of allowing connection of the electronic device 100 to at least two APs (e.g., the first AP 501 and the second AP 502) via short-range wireless communication is supported. The function of allowing connection of the electronic device 100 to at least two APs (e.g., the first AP 501 and the second AP 502) via short-range wireless communication may refer to a function in which, while the electronic device 100 is connected to the first AP 501 via short-range wireless communication and performs data transmission and/or reception, it can also be connected to the second AP 502 via short-range wireless communication and perform data transmission and/or reception. According to an example, the function of allowing connection of the electronic device 100 to at least two APs (e.g., the first AP 501 and the second AP 502) via short-range wireless communication may be referred to as a dual STA interface support function.

In operation 1003, the external electronic device 503 may transmit, to the electronic device 100, a second service discovery frame that includes information related to the DFS channel and information indicating the maximum bandwidth supportable by the external electronic device 503.

The electronic device 100 may receive the second service discovery frame from the external electronic device 503 in the process of discovering the external electronic device 503 capable of performing NAN communication.

The second service discovery frame may include information related to negotiation for activating NAN communication between the electronic device 100 and the external electronic device 503. According to an example, the second service discovery frame may include information of the external electronic device 503, performance information of the external electronic device 503 (e.g., information indicating the maximum bandwidth supportable by the external electronic device 503), and/or identification information of a service related to NAN communication.

The second service discovery frame may include information related to the DFS channel. The information related to the DFS channel may include information indicating whether a second AP (e.g., the second AP 502 in FIG. 5) discovered by the external electronic device 503 through a scanning operation supports the DFS, information related to the second AP 502 (e.g., identification information (e.g., SSID, BSSID) of the second AP 502), and/or information indicating the DFS channel connectable between the external electronic device 503 and the second AP 502.

The information related to the DFS channel may include information indicating whether the external electronic device 503 supports NAN communication using the DFS channel. If the external electronic device 503 supports NAN communication using the DFS channel, an NDP may be established through the DFS channel, and the electronic device 100 and the external electronic device 503 may perform NAN communication through the DFS channel.

The second service discovery frame may include information indicating whether a function of allowing connection of the external electronic device 503 to at least two APs (e.g., the first AP 501 and the second AP 502) via short-range wireless communication is supported. The function of allowing connection of the external electronic device 503 to at least two APs (e.g., the first AP 501 and the second AP 502) via short-range wireless communication may refer to a function in which, while the external electronic device 503 is connected to the first AP 501 via short-range wireless communication and performs data transmission and/or reception, it can also be connected to the second AP 502 via short-range wireless communication and perform data transmission and/or reception. According to an example, the function of allowing connection of the external electronic device 503 to at least two APs (e.g., the first AP 501 and the second AP 502) via short-range wireless communication may be referred to as a dual STA interface support function.

In operation 1004, the electronic device 100 may be connected to the second AP 502 through the DFS channel.

The electronic device 100 may receive the second service discovery frame from the external electronic device 503 and, based on the second service discovery frame, identify whether the external electronic device 503 supports the DFS. The electronic device 100 may identify whether the external electronic device 503 supports the DFS, based on the DFS channel related information included in the second service discovery frame.

The electronic device 100 may identify the maximum bandwidth supportable by the external electronic device 503, based on the second service discovery frame. The electronic device 100 may identify the maximum bandwidth supportable by the external electronic device 503, based on the performance information of the external electronic device 503 included in the second service discovery frame.

The electronic device 100 may identify whether the external electronic device 503 is connectable to the second AP 502, based on the second service discovery frame received from the external electronic device 503. According to an example, upon identifying that there is no AP connected to the external electronic device 503 through short-range wireless communication, the electronic device 100 may determine that the external electronic device 503 is connectable to the second AP 502. According to an example, the electronic device 100 may identify whether the external electronic device 503 supports a function capable of connecting to at least two APs via short-range wireless communication. Upon identifying that the external electronic device 503 supports the function capable of connecting to at least two APs via short-range wireless communication, the electronic device 100 may determine that the external electronic device 503 is connectable to the second AP 502.

Upon identifying that the external electronic device 503 supports the DFS, the maximum bandwidth supportable by the external electronic device 503 is greater than a bandwidth of a channel established between the electronic device 100 and the first AP 501, and the external electronic device 503 is connectable to the second AP 502, the electronic device 100 may request the external electronic device 503 to connect to the second AP 502 via the DFS channel. According to an example, the electronic device 100 may control the communication circuitry 610 to transmit, to the external electronic device 503, a signal requesting the external electronic device 503 to activate a function capable of connecting to at least two APs via short-range wireless communication. If the external electronic device 503 activates the function capable of connecting to at least two APs via short-range wireless communication, the electronic device 100 may request that the external electronic device 503 be connected to the second AP 502 via the DFS channel.

The external electronic device 503 may perform an operation of connecting to the second AP 502 supporting the DFS via the DFS channel.

According to an example, the second AP 502 supporting the DFS may detect (or, identify, monitor) a radar signal which is not a signal of short-range wireless communication. If the radar signal is not detected, the second AP 502 may provide short-range wireless communication to the external electronic device 503 via the DFS channel. If the radar signal is detected, the second AP 502 may control the external electronic device 503 to perform short-range wireless communication by changing to a channel different from the DFS channel. A signal requesting a change from the DFS channel to any other channel may be included in a clear to send (CTS) frame. The external electronic device 503 may perform short-range wireless communication via the DFS channel, and upon receiving a signal requesting a change from the DFS channel to other channel from the second AP 502, it may change from the DFS channel to other channel and perform short-range wireless communication through the other channel.

In operation 1005, the electronic device 100 and the external electronic device 503 may establish an NDP.

After the external electronic device 503 completes a connection with the second AP 502 through the DFS channel, the electronic device 100 may perform a procedure for establishing (or configuring, generating) the NDP with the external electronic device 503, based on the first service discovery frame and/or the second service discovery frame. The electronic device 100 may generate (or configure) first schedule information related to performing NAN communication, as at least a part of the operation for establishing the NDP with the external electronic device 503.

The first schedule information may refer to information that allows the electronic device 100 and the external electronic device 503 to perform NAN communication through the frequency band of the non-DFS channel and the frequency band of the DFS channel during a first period which is at least a portion of an interval (e.g., the interval 460) between discovery windows (e.g., the discovery windows 450 in FIG. 4). The first period may be referred to as a further available window (FAW), considering that it is an additional period during which NAN communication is possible, other than the discovery window 450 defined in the NAN cluster.

Since the electronic device 100 and the external electronic device 503 may perform data transmission and/or reception through the frequency band of the DFS channel and the frequency band of the non-DFS channel, the electronic device 100 may configure (or generate) the first schedule information so that the electronic device 100 and the external electronic device 503 may perform NAN communication through the frequency band of the non-DFS channel and the frequency band of the DFS channel during the first period which is at least a portion of the interval 460 between the discovery windows 450.

The electronic device 100 may configure the first schedule information so that the electronic device 100 and the external electronic device 503 may perform NAN communication through the non-DFS channel and the DFS channel during the first period which is at least a portion of the interval 460 between the discovery windows 450. According to an example, if other channels (e.g., channels 106, 122, and 138 in the 5 GHz band) exist between the non-DFS channel (e.g., channel 155 in the 5 GHz band) and the DFS channel (e.g., channel 58 in the 5 GHz band), the electronic device 100 may configure the first schedule information so that the NAN communication may be performed through at least two channels (e.g., the non-DFS channel and the DFS channel).

The electronic device 100 may configure the first schedule information so that the electronic device 100 and the external electronic device 503 may perform NAN communication through any other channel (e.g., channel 50 in the 5 GHz band) including the frequency band of the non-DFS channel (e.g., channel 42 in the 5 GHz band) and the frequency band of the DFS channel (e.g., channel 58 in the 5 GHz band) during the first period which is at least a portion of the interval 460 between the discovery windows 450. According to an example, if there is no other channel between the non-DFS channel (e.g., channel 42 in the 5 GHz band) and the DFS channel (e.g., channel 58 in the 5 GHz band), the electronic device 100 may configure the first schedule information so that NAN communication can be performed through other channel including the frequency band of the non-DFS channel and the frequency band of the DFS channel.

By configuring the first schedule information to perform NAN communication based on the frequency band of the non-DFS channel and the frequency band of the DFS channel, the electronic device 100 can increase the bandwidth of a channel used to perform NAN communication, and can improve the performance of device-to-device communication as the bandwidth of the channel increases.

According to an example, the first schedule information may be configured to allow the electronic device 100 and the external electronic device 503 to perform NAN communication through the frequency band of the non-DFS channel (e.g., a channel between the first AP 501 and the electronic device 100) and the frequency band of the DFS channel during the first period of the interval 460 between the discovery windows 450, and to perform NAN communication through the frequency band of any other non-DFS channel, which is different from the channel between the first AP 501 and the electronic device 100, and the frequency band of the DFS channel during the second period of the interval 460 between the discovery windows 450. The other non-DFS channel may be the same as a channel (e.g., channel 155 in the 5 GHz band) allocated to perform NAN communication in a cluster including the electronic device 100 and the external electronic device 503.

The electronic device 100 may perform short-range wireless communication with the first AP 501 through the non-DFS channel during the second period.

According to an example, the first schedule information may be configured to allow the electronic device 100 and the external electronic device 503 to perform NAN communication through the frequency band of the non-DFS channel (e.g., the channel between the first AP 501 and the electronic device 100) and the frequency band of the DFS channel during the interval 460 (or during the first period and the second period) between the discovery windows 450.

The electronic device 100 may perform short-range wireless communication with the first AP 501 through the non-DFS channel during at least a portion of the interval between the discovery windows 450.

According to an example, the first schedule information may be configured to allow the electronic device 100 and the external electronic device 503 to perform NAN communication through the frequency band of the non-DFS channel (e.g., the channel between the first AP 501 and the electronic device 100) and the frequency band of the DFS channel during the first period of the interval 460 between the discovery windows 450, and to perform NAN communication through the non-DFS channel different from the channel between the first AP 501 and the electronic device 100 during the second period, different from the first period, of the interval 460. The electronic device 100 may configure the first schedule information to refrain from (or prohibit) performing NAN communication using the DFS channel during the second period.

In operation 1006, the electronic device 100 and the external electronic device 503 may perform NAN communication, based on the first schedule information.

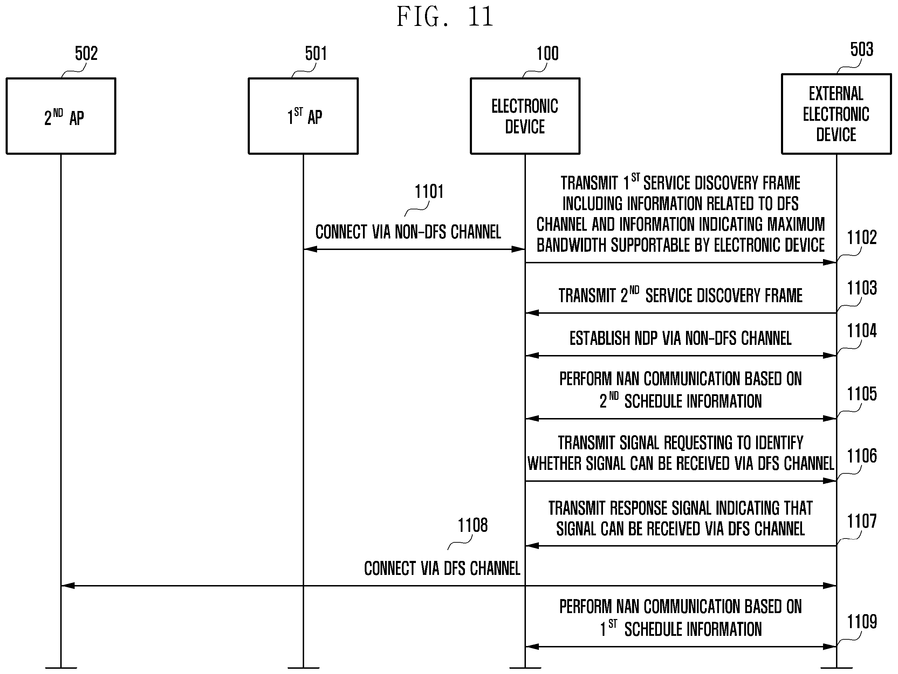

FIG. 11 is a diagram illustrating an example of performing NAN communication based on first schedule information related to NAN communication through a frequency band of a non-DFS channel and a frequency band of a DFS channel by an electronic device according to one embodiment.

In operation 1101, an electronic device (e.g., the electronic device 100 in FIG. 6) and a first AP (e.g., the first AP 501 in FIG. 5) may be connected through a non-DFS channel.

The electronic device 100 may be connected via short-range wireless communication to an AP (e.g., the first AP 501 in FIG. 5) that does not support a dynamic frequency selection (DFS). Alternatively, the electronic device 100 may be connected via a non-DFS channel to an AP (e.g., the first AP 501 in FIG. 5) that supports the DFS. The DFS may refer to a technology that enables short-range wireless communication via a DFS channel, which is a channel used for various purposes (e.g., military purposes or weather observation purposes). The DFS channel may have relatively lower congestion (or channel utilization) than other channels, and the performance of short-range wireless communication via the DFS channel may be higher than the performance of short-range wireless communication via other channels.

In operation 1102, the electronic device 100 may transmit, to an external electronic device (e.g., the external electronic device 503 in FIG. 5), a first service discovery frame including information related to the DFS channel and information indicating a maximum bandwidth supportable by the electronic device 100.

The electronic device 100 may activate NAN communication. According to an example, the electronic device 100 may activate NAN communication when data transmission and/or reception via NAN communication is required, when a service or application related to data transmission and/or reception via NAN communication is activated, and/or when a user input for performing data transmission and/or reception via NAN communication is received.

The electronic device 100 may activate NAN communication in a state where short-range wireless communication is activated. Alternatively, the electronic device 100 may activate the short-range wireless communication and the NAN communication at substantially the same time.

The electronic device 100 may discover an electronic device (e.g., the external electronic device 503 in FIG. 5) capable of performing NAN communication, as a part of an operation of activating the NAN communication. The electronic device 100 may control the communication circuitry 610 to transmit a first service discovery frame to the external electronic device 503.

The first service discovery frame may include information related to negotiation for activating NAN communication between the electronic device 100 and the external electronic device 503. According to an example, the first service discovery frame may include information of the electronic device 100, performance information of the electronic device 100 (e.g., information indicating the maximum bandwidth supportable by the electronic device 100), and/or identification information of a service related to NAN communication.

The first service discovery frame may include information related to the first AP 501 connected to the electronic device 100 via short-range wireless communication. The information related to the first AP 501 may include information indicating whether the first AP 501 supports the DFS, identification information (e.g., SSID, BSSID) of the first AP 501, and/or information indicating the non-DFS channel between the electronic device 100 and the first AP 501.

The first service discovery frame may include information related to the DFS channel. The information related to the DFS channel may include information indicating whether a second AP (e.g., the second AP 502 in FIG. 5) discovered by the electronic device 100 through a scanning operation supports the DFS, information related to the second AP 502 (e.g., identification information (e.g., SSID, BSSID) of the second AP 502), and/or information indicating the DFS channel connectable between the electronic device 100 and the second AP 502.

The information related to the DFS channel may include information indicating whether the electronic device 100 supports NAN communication using the DFS channel. If the electronic device 100 supports NAN communication using the DFS channel, an NDP may be established through the DFS channel, and the electronic device 100 and the external electronic device 503 may perform NAN communication through the DFS channel.

The first service discovery frame may include information indicating whether a function of allowing connection of the electronic device 100 to at least two APs (e.g., the first AP 501 and the second AP 502) via short-range wireless communication is supported. The function of allowing connection of the electronic device 100 to at least two APs (e.g., the first AP 501 and the second AP 502) via short-range wireless communication may refer to a function in which, while the electronic device 100 is connected to the first AP 501 via short-range wireless communication and performs data transmission and/or reception, it can also be connected to the second AP 502 via short-range wireless communication and perform data transmission and/or reception. According to an example, the function of allowing connection of the electronic device 100 to at least two APs (e.g., the first AP 501 and the second AP 502) via short-range wireless communication may be referred to as a dual STA interface support function.

In operation 1103, the external electronic device 503 may transmit a second service discovery frame to the electronic device 100.

According to an example, the electronic device 100 may identify that the second service discovery frame received from the external electronic device 503 does not include information related to the DFS channel.

According to an example, if the external electronic device 503 is not connected to the second AP 502 supporting the DFS through short-range wireless communication, the external electronic device 503 may identify (or scan) whether it can receive a signal being transmitted from the second AP 502 included in the information related to the DFS channel through each of a plurality of DFS channels, and transmit the service discovery frame including the identifying result (e.g., discovering a channel capable of receiving a signal transmitted from the second AP 502) to the electronic device 100. The electronic device 100 may identify the information related to the DFS channel included in the service discovery frame, and determine whether the external electronic device 503 can perform NAN communication through the DFS channel.

However, the time taken for the external electronic device 503 to identify whether it can receive the signal being transmitted from the second AP 502 included in the information related to the DFS channel through each of the plurality of DFS channels may take up a large proportion of the time taken to establish NAN communication. As the time taken to identify whether the signal being transmitted from the second AP 502 included in the information related to the DFS channel can be received through each of the plurality of DFS channels increases, the time taken to establish NAN communication may increase, and the delay time related to activating the service through NAN communication may increase.

In operation 1104, the electronic device 100 and the external electronic device 503 may establish an NDP through the non-DFS channel.

In order to resolve the phenomenon described above, the electronic device 100 may establish the NDP with the external electronic device 503 through the non-DFS channel rather than the DFS channel if the second service discovery frame received from the external electronic device 503 does not include the DFS channel related information.

The electronic device 100 may generate (or configure) second schedule information related to performing NAN communication, as at least a part of the operation of establishing the NDP with the external electronic device 503.

The second schedule information may refer to information that allows the electronic device 100 and the external electronic device 503 to perform NAN communication through the non-DFS channel (e.g., a default NDP channel configured for the cluster including the electronic device 100 and the external electronic device 503) during at least a portion of the interval (e.g., the interval 460) between the discovery windows (e.g., the discovery windows 450 in FIG. 4). According to an example, the electronic device 100 may generate (or configure) the second schedule information to perform NAN communication during a portion of the interval 460 between the discovery windows 450. This portion of the interval may be referred to as a further available window (FAW), considering that it is an additional period during which NAN communication is possible, other than the discovery window 450 defined in the NAN cluster.

According to an example, the second schedule information may refer to information that allows the electronic device 100 and the external electronic device 503 to perform short-range wireless communication during a period other than a portion of the interval 460 between the discovery windows 450. The other period may be referred to as an unaligned window (ULW), considering the characteristic of performing short-range wireless communication, other than NAN communication, between the discovery windows 450. According to an example, the processor 420 may configure the second schedule information so that the electronic device 100 may perform short-range wireless communication through the non-DFS channel established between the electronic device 100 and the first AP 501.

In operation 1105, the electronic device 100 and the external electronic device 503 may perform NAN communication based on the second schedule information.

The electronic device 100 may establish the NDP through the non-DFS channel and perform NAN communication with the external electronic device 503 based on the second schedule information related to performing NAN communication. The electronic device 100 may control the communication circuitry 610 to perform NAN communication with the external electronic device 503 during a portion of the period between the discovery windows 450, and control the communication circuitry 610 to perform short-range wireless communication with the first AP 501 during the other portion of the period between the discovery windows 450.

In operation 1107, the electronic device 100 may transmit, to the external electronic device 503, a signal requesting to identify whether the external electronic device 503 can receive a signal through the DFS channel.

According to an example, after establishing the NDP (or while performing the NAN communication), the external electronic device 503 may identify (or scan) whether it can receive the signal being transmitted from the second AP 502, based on the information related to the DFS channel transmitted by the electronic device 100. If determining that the signal transmitted by the second AP 502 can be received through the DFS channel, the external electronic device 503 may transmit, to the electronic device 100, a signal (or message, frame) indicating that the signal transmitted by the second AP 502 can be received through the DFS channel.

According to an example, after establishing the NDP (or while performing the NAN communication), the electronic device 100 may control the communication circuitry 610 to transmit, to the external electronic device 503, a request signal (or message, frame) to request identifying whether the external electronic device 503 can receive a signal from the second AP 502 through the DFS channel.

In operation 1108, the external electronic device 503 may transmit, to the electronic device 100, a response signal indicating that it can receive a signal through the DFS channel.

Upon receiving the request signal, the external electronic device 503 may identify (or scan) whether the signal transmitted by the second AP 502 can be received, based on information related to the DFS channel included in the request signal or the service discovery frame. The external electronic device 503 may transmit, to the electronic device 100, a response signal indicating that the signal transmitted by the second AP 502 can be received through the DFS channel.

According to an example, after establishing the NDP (or while performing the NAN communication), the electronic device 100 may not transmit, to the external electronic device 503, the request signal (or message, frame) to request identifying whether the external electronic device 503 can receive a signal from the second AP 502 through the DFS channel. If the information related to the DFS channel is included in the service discovery frame received from the electronic device 100 before the establishment of the NDP, the external electronic device 503 may identify (or scan) whether it can receive a signal being transmitted from the second AP 502, based on the information related to the DFS channel included in the service discovery frame, after establishing the NDP (or while performing the NAN communication).

The electronic device 100 may transmit the DFS channel related information including information indicating the DFS channel discovered by the electronic device 100 through a scanning operation to the external electronic device 503. Instead of performing scanning for a plurality of DFS channels, the external electronic device 503 may identify whether it can receive a signal being transmitted from the second AP 502 through the DFS channel included in the DFS channel related information. The request signal may prevent the external electronic device 503 from performing an operation of identifying whether it can receive a signal being transmitted from the second AP 502 through a DFS channel different from the DFS channel included in the request signal. Therefore, the electronic device 100 can significantly reduce the time required for configuring the NDP through the DFS channel.

In operation 1108, the electronic device 100 may be connected to the second AP 502 through the DFS channel.

The electronic device 100 may receive the second service discovery frame from the external electronic device 503 and, based on the second service discovery frame, identify whether the external electronic device 503 supports the DFS. The electronic device 100 may identify whether the external electronic device 503 supports the DFS, based on the DFS channel related information included in the second service discovery frame.

The electronic device 100 may identify the maximum bandwidth supportable by the external electronic device 503, based on the second service discovery frame. The electronic device 100 may identify the maximum bandwidth supportable by the external electronic device 503, based on the performance information of the external electronic device 503 included in the second service discovery frame.

The electronic device 100 may identify whether the external electronic device 503 is connectable to the second AP 502, based on the second service discovery frame received from the external electronic device 503. According to an example, upon identifying that there is no AP connected to the external electronic device 503 through short-range wireless communication, the electronic device 100 may determine that the external electronic device 503 is connectable to the second AP 502. According to an example, the electronic device 100 may identify whether the external electronic device 503 supports a function capable of connecting to at least two APs via short-range wireless communication. Upon identifying that the external electronic device 503 supports the function capable of connecting to at least two APs via short-range wireless communication, the electronic device 100 may determine that the external electronic device 503 is connectable to the second AP 502.

Upon identifying that the external electronic device 503 supports the DFS, the maximum bandwidth supportable by the external electronic device 503 is greater than a bandwidth of a channel established between the electronic device 100 and the first AP 501, and the external electronic device 503 is connectable to the second AP 502, the electronic device 100 may request the external electronic device 503 to connect to the second AP 502 via the DFS channel. According to an example, the electronic device 100 may control the communication circuitry 610 to transmit, to the external electronic device 503, a signal requesting the external electronic device 503 to activate a function capable of connecting to at least two APs via short-range wireless communication. If the external electronic device 503 activates the function capable of connecting to at least two APs via short-range wireless communication, the electronic device 100 may request that the external electronic device 503 be connected to the second AP 502 via the DFS channel.

The external electronic device 503 may perform an operation of connecting to the second AP 502 supporting the DFS via the DFS channel.

According to an example, the second AP 502 supporting the DFS may detect (or, identify, monitor) a radar signal which is not a signal of short-range wireless communication. If the radar signal is not detected, the second AP 502 may provide short-range wireless communication to the external electronic device 503 via the DFS channel. If the radar signal is detected, the second AP 502 may control the external electronic device 503 to perform short-range wireless communication by changing to a channel different from the DFS channel. A signal requesting a change from the DFS channel to any other channel may be included in a clear to send (CTS) frame. The external electronic device 503 may perform short-range wireless communication via the DFS channel, and upon receiving a signal requesting a change from the DFS channel to other channel from the second AP 502, it may change from the DFS channel to other channel and perform short-range wireless communication through the other channel.

In operation 1109, the electronic device 100 and the external electronic device 503 may perform NAN communication, based on the first schedule information.

After establishing the NDP (or while performing the NAN communication), if the electronic device 100 receives, from the external electronic device 503, information indicating that the signal transmitted by the second AP 502 can be received through the DFS channel, the electronic device 100 may change (or update) the second schedule information. The electronic device 100 may change (or update) the second schedule information so that the NAN communication can be performed through the DFS channel and the non-DFS channel. According to an example, upon identifying that the external electronic device 503 can receive the signal being transmitted from the second AP 502 through the DFS channel, the electronic device 100 may control the communication circuitry 610 to perform the NAN communication based on the first schedule information.

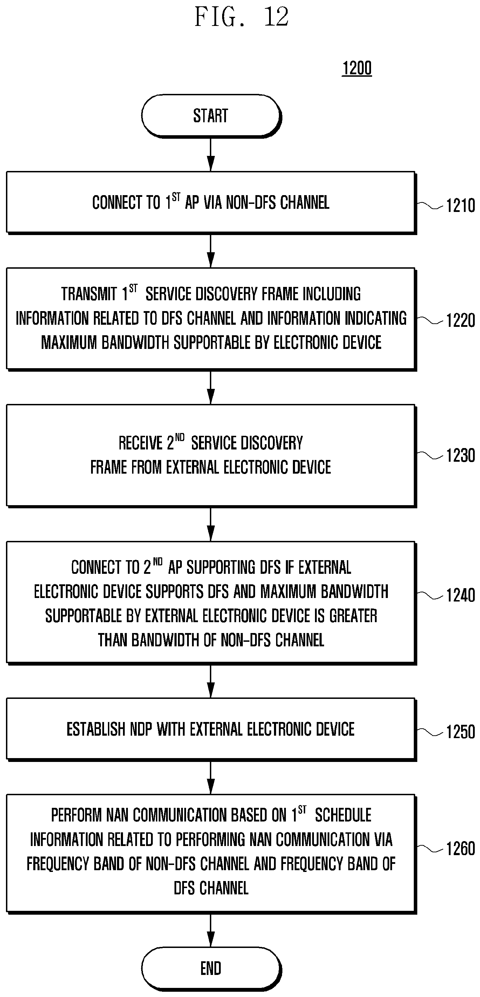

FIG. 12 is a flowchart illustrating steps of an operating method 1200 of an electronic device according to an embodiment.

In operation 1210, an electronic device (e.g., the electronic device 100 in FIG. 6) may be connected to a first AP (e.g., the first AP 501 in FIG. 5) through a non-DFS channel.

The electronic device 100 may be connected via short-range wireless communication to an AP (e.g., the first AP 501 in FIG. 5) that does not support a dynamic frequency selection (DFS). Alternatively, the electronic device 100 may be connected via a non-DFS channel to an AP (e.g., the first AP 501 in FIG. 5) that supports the DFS. The DFS may refer to a technology that enables short-range wireless communication via a DFS channel, which is a channel used for various purposes (e.g., military purposes or weather observation purposes). The DFS channel may have relatively lower congestion (or channel utilization) than other channels, and the performance of short-range wireless communication via the DFS channel may be higher than the performance of short-range wireless communication via other channels.

In operation 1220, the electronic device 100 may transmit, to an external electronic device 503, a first service discovery frame including information related to the DFS channel and information indicating a maximum bandwidth supportable by the electronic device 100.

The electronic device 100 may activate NAN communication. According to an example, the electronic device 100 may activate NAN communication when data transmission and/or reception via NAN communication is required, when a service or application related to data transmission and/or reception via NAN communication is activated, and/or when a user input for performing data transmission and/or reception via NAN communication is received.

The electronic device 100 may activate NAN communication in a state where short-range wireless communication is activated. Alternatively, the electronic device 100 may activate the short-range wireless communication and the NAN communication at substantially the same time.

The electronic device 100 may discover an electronic device (e.g., the external electronic device 503 in FIG. 5) capable of performing NAN communication, as a part of an operation of activating the NAN communication. The electronic device 100 may control the communication circuitry 610 to transmit a first service discovery frame to the external electronic device 503.

The first service discovery frame may include information related to negotiation for activating NAN communication between the electronic device 100 and the external electronic device 503. According to an example, the first service discovery frame may include information of the electronic device 100, performance information of the electronic device 100 (e.g., information indicating the maximum bandwidth supportable by the electronic device 100), and/or identification information of a service related to NAN communication.

The first service discovery frame may include information related to the first AP 501 connected to the electronic device 100 via short-range wireless communication. The information related to the first AP 501 may include information indicating whether the first AP 501 supports the DFS, identification information (e.g., SSID, BSSID) of the first AP 501, and/or information indicating the non-DFS channel between the electronic device 100 and the first AP 501.

The first service discovery frame may include information related to the DFS channel. The information related to the DFS channel may include information indicating whether a second AP (e.g., the second AP 502 in FIG. 5) discovered by the electronic device 100 through a scanning operation supports the DFS, information related to the second AP 502 (e.g., identification information (e.g., SSID, BSSID) of the second AP 502), and/or information indicating the DFS channel connectable between the electronic device 100 and the second AP 502.

The information related to the DFS channel may include information indicating whether the electronic device 100 supports NAN communication using the DFS channel. If the electronic device 100 supports NAN communication using the DFS channel, an NDP may be established through the DFS channel, and the electronic device 100 and the external electronic device 503 may perform NAN communication through the DFS channel.

The first service discovery frame may include information indicating whether a function of allowing connection of the electronic device 100 to at least two APs (e.g., the first AP 501 and the second AP 502) via short-range wireless communication is supported. The function of allowing connection of the electronic device 100 to at least two APs (e.g., the first AP 501 and the second AP 502) via short-range wireless communication may refer to a function in which, while the electronic device 100 is connected to the first AP 501 via short-range wireless communication and performs data transmission and/or reception, it can also be connected to the second AP 502 via short-range wireless communication and perform data transmission and/or reception. According to an example, the function of allowing connection of the electronic device 100 to at least two APs (e.g., the first AP 501 and the second AP 502) via short-range wireless communication may be referred to as a dual STA interface support function.

In operation 1230, the electronic device 100 may receive the second service discovery frame from the external electronic device 503 in the process of discovering the external electronic device 503 capable of performing NAN communication.

The second service discovery frame may include information related to negotiation for activating NAN communication between the electronic device 100 and the external electronic device 503. According to an example, the second service discovery frame may include information of the external electronic device 503, performance information of the external electronic device 503 (e.g., information indicating the maximum bandwidth supportable by the external electronic device 503), and/or identification information of a service related to NAN communication.

The second service discovery frame may include information related to the DFS channel. The information related to the DFS channel may include information indicating whether a second AP (e.g., the second AP 502 in FIG. 5) discovered by the external electronic device 503 through a scanning operation supports the DFS, information related to the second AP 502 (e.g., identification information (e.g., SSID, BSSID) of the second AP 502), and/or information indicating the DFS channel connectable between the external electronic device 503 and the second AP 502.

The information related to the DFS channel may include information indicating whether the external electronic device 503 supports NAN communication using the DFS channel. If the external electronic device 503 supports NAN communication using the DFS channel, an NDP may be established through the DFS channel, and the electronic device 100 and the external electronic device 503 may perform NAN communication through the DFS channel.

The second service discovery frame may include information indicating whether a function of allowing connection of the external electronic device 503 to at least two APs (e.g., the first AP 501 and the second AP 502) via short-range wireless communication is supported. The function of allowing connection of the external electronic device 503 to at least two APs (e.g., the first AP 501 and the second AP 502) via short-range wireless communication may refer to a function in which, while the external electronic device 503 is connected to the first AP 501 via short-range wireless communication and performs data transmission and/or reception, it can also be connected to the second AP 502 via short-range wireless communication and perform data transmission and/or reception. According to an example, the function of allowing connection of the external electronic device 503 to at least two APs (e.g., the first AP 501 and the second AP 502) via short-range wireless communication may be referred to as a dual STA interface support function.

In operation 1240, if the external electronic device 503 supports the DFS and the maximum bandwidth supportable by the external electronic device 503 is greater than the bandwidth of the non-DFS channel, the electronic device 100 may (connect) be connected to the second AP (e.g., the second AP 502 in FIG. 5) supporting the DFS.

The electronic device 100 may receive the second service discovery frame from the external electronic device 503 and, based on the second service discovery frame, identify whether the external electronic device 503 supports the DFS. The electronic device 100 may identify whether the external electronic device 503 supports the DFS, based on the DFS channel related information included in the second service discovery frame.

The electronic device 100 may identify the maximum bandwidth supportable by the external electronic device 503, based on the second service discovery frame. The electronic device 100 may identify the maximum bandwidth supportable by the external electronic device 503, based on the performance information of the external electronic device 503 included in the second service discovery frame.

If the external electronic device 503 supports the DFS, and the maximum bandwidth supportable by the external electronic device 503 is greater than a bandwidth of a channel established between the electronic device 100 and the first AP 501, the electronic device 100 may perform an operation of connecting to the second AP 502 supporting the DFS through the DFS channel. If the electronic device 100 supports a function of being connectable to at least two APs via short-range wireless communication, the electronic device 100 may control the communication circuitry 610 to perform a connection to the second AP 502 through the DFS channel while maintaining a connection between the first AP 501 and the electronic device 100 through the non-DFS channel.

According to an example, the second AP 502 supporting the DFS may detect (or, identify, monitor) a radar signal which is not a signal of short-range wireless communication. If the radar signal is not detected, the second AP 502 may provide short-range wireless communication to the electronic device 100 via the DFS channel. If the radar signal is detected, the second AP 502 may control the electronic device 100 to perform short-range wireless communication by changing to a channel different from the DFS channel. A signal requesting a change from the DFS channel to any other channel may be included in a clear to send (CTS) frame. The electronic device 100 may perform short-range wireless communication via the DFS channel, and upon receiving a signal requesting a change from the DFS channel to other channel from the second AP 502, it may change from the DFS channel to other channel and perform short-range wireless communication through the other channel.

In operation 1250, the electronic device 100 may establish an NDP with the external electronic device 503.

After completing a connection with the second AP 502 through the DFS channel (or while performing a connection procedure with the second AP 502 through the DFS channel), the electronic device 100 may perform a procedure for establishing (or configuring, generating) the NDP with the external electronic device 503, based on the first service discovery frame and/or the second service discovery frame. The electronic device 100 may generate (or configure) first schedule information related to performing NAN communication, as at least a part of the operation for establishing the NDP with the external electronic device 503.

The first schedule information may refer to information that allows the electronic device 100 and the external electronic device 503 to perform NAN communication through the frequency band of the non-DFS channel and the frequency band of the DFS channel during a first period which is at least a portion of an interval (e.g., the interval 460) between discovery windows (e.g., the discovery windows 450 in FIG. 4). The first period may be referred to as a further available window (FAW), considering that it is an additional period during which NAN communication is possible, other than the discovery window 450 defined in the NAN cluster.

Since the electronic device 100 and the external electronic device 503 may perform data transmission and/or reception through the frequency band of the DFS channel and the frequency band of the non-DFS channel, the electronic device 100 may configure (or generate) the first schedule information so that the electronic device 100 and the external electronic device 503 may perform NAN communication through the frequency band of the non-DFS channel and the frequency band of the DFS channel during the first period which is at least a portion of the interval 460 between the discovery windows 450.

The electronic device 100 may configure the first schedule information so that the electronic device 100 and the external electronic device 503 may perform NAN communication through the non-DFS channel and the DFS channel during the first period which is at least a portion of the interval 460 between the discovery windows 450. According to an example, if other channels (e.g., channels 106, 122, and 138 in the 5 GHz band) exist between the non-DFS channel (e.g., channel 155 in the 5 GHz band) and the DFS channel (e.g., channel 58 in the 5 GHz band), the electronic device 100 may configure the first schedule information so that the NAN communication may be performed through at least two channels (e.g., the non-DFS channel and the DFS channel).

The electronic device 100 may configure the first schedule information so that the electronic device 100 and the external electronic device 503 may perform NAN communication through any other channel (e.g., channel 50 in the 5 GHz band) including the frequency band of the non-DFS channel (e.g., channel 42 in the 5 GHz band) and the frequency band of the DFS channel (e.g., channel 58 in the 5 GHz band) during the first period which is at least a portion of the interval 460 between the discovery windows 450. According to an example, if there is no other channel between the non-DFS channel (e.g., channel 42 in the 5 GHz band) and the DFS channel (e.g., channel 58 in the 5 GHz band), the electronic device 100 may configure the first schedule information so that NAN communication can be performed through other channel including the frequency band of the non-DFS channel and the frequency band of the DFS channel.

By configuring the first schedule information to perform NAN communication based on the frequency band of the non-DFS channel and the frequency band of the DFS channel, the electronic device 100 can increase the bandwidth of a channel used to perform NAN communication, and can improve the performance of device-to-device communication as the bandwidth of the channel increases.

According to an example, the first schedule information may be configured to allow the electronic device 100 and the external electronic device 503 to perform NAN communication through the frequency band of the non-DFS channel (e.g., a channel between the first AP 501 and the electronic device 100) and the frequency band of the DFS channel during the first period of the interval 460 between the discovery windows 450, and to perform NAN communication through the frequency band of any other non-DFS channel, which is different from the channel between the first AP 501 and the electronic device 100, and the frequency band of the DFS channel during the second period of the interval 460 between the discovery windows 450. The other non-DFS channel may be the same as a channel (e.g., channel 155 in the 5 GHz band) allocated to perform NAN communication in a cluster including the electronic device 100 and the external electronic device 503.

The electronic device 100 may perform short-range wireless communication with the second AP 502 through the DFS channel during the first period, and perform short-range wireless communication with the first AP 501 through the non-DFS channel during the second period.

According to an example, the first schedule information may be configured to allow the electronic device 100 and the external electronic device 503 to perform NAN communication through the frequency band of the non-DFS channel (e.g., the channel between the first AP 501 and the electronic device 100) and the frequency band of the DFS channel during the interval 460 (or during the first period and the second period) between the discovery windows 450.

During the interval between the discovery windows 450, the electronic device 100 may perform short-range wireless communication with the second AP 502 through the DFS channel and perform short-range wireless communication with the first AP 501 through the non-DFS channel.

According to an example, the first schedule information may be configured to allow the electronic device 100 and the external electronic device 503 to perform NAN communication through the frequency band of the non-DFS channel (e.g., the channel between the first AP 501 and the electronic device 100) and the frequency band of the DFS channel during the first period of the interval 460 between the discovery windows 450, and to perform NAN communication through the non-DFS channel different from the channel between the first AP 501 and the electronic device 100 during the second period, different from the first period, of the interval 460. The electronic device 100 may configure the first schedule information to refrain from (or prohibit) performing NAN communication using the DFS channel during the second period.

The electronic device 100 may perform short-range wireless communication with the second AP 502 through the DFS channel during the first period.

In operation 1260, the electronic device 100 may perform NAN communication, based on the first schedule information related to performing NAN communication through (i.e., via) the frequency band of the non-DFS channel and the frequency band of the DFS channel.

An electronic device according to an example may include a communication circuitry 610 supporting short-range wireless communication and neighbor awareness network (NAN) communication. The electronic device may include a memory 630 storing at least one computer program. The electronic device may include at least one processor 620. The at least one computer program may include instructions that cause, when executed by the at least one processor 620 individually or collectively, the electronic device to connect to a first access point (AP) 501 through a non-dynamic frequency selection (non-DFS) channel. The instructions may cause, when executed by the at least one processor 620 individually or collectively, the electronic device to transmit, to an external electronic device 503, a first service discovery frame including information related to a DFS channel and information indicating a maximum bandwidth supportable by the electronic device, in a process of discovering the external electronic device 503 to be connected via an NAN data path (NDP). The instructions may cause, when executed by the at least one processor 620 individually or collectively, the electronic device to connect to a second AP 502 supporting the DFS through the DFS channel while maintaining a connection between the first AP and the electronic device, upon identifying, based on a second service discovery frame received from the external electronic device 503, that the external electronic device 503 supports the DFS and a maximum bandwidth supportable by the external electronic device is greater than a bandwidth of the non-DFS channel. The instructions may cause, when executed by the at least one processor 620 individually or collectively, the electronic device to establish the NDP with the external electronic device 503, based on the first service discovery frame and/or the second service discovery frame. The instructions may cause, when executed by the at least one processor 620 individually or collectively, the electronic device to perform NAN communication with the external electronic device 503, based on first schedule information related to performing the NAN communication through a frequency band of the non-DFS channel and a frequency band of the DFS channel. The first schedule information may enable the external electronic device 503 and the electronic device to perform the NAN communication through the frequency band of the non-DFS channel and the frequency band of the DFS channel during a first period between discovery windows.

In the electronic device according to an example, the first schedule information may enable the external electronic device 503 and the electronic device to perform the NAN communication through the frequency band of the DFS channel and a frequency band of other non-DFS channel during a second period between the discovery windows.

In the electronic device according to an example, the first schedule information may enable the external electronic device 503 and the electronic device to perform the NAN communication through the frequency band of the non-DFS channel and the frequency band of the DFS channel during a second period between the discovery windows.

In the electronic device according to an example, the first schedule information may enable the external electronic device 503 and the electronic device to perform the NAN communication through the frequency band of the non-DFS channel during a second period between the discovery windows.

In the electronic device according to an example, the first schedule information may enable the external electronic device 503 and the electronic device to perform the NAN communication through other channel including the frequency band of the non-DFS channel and the frequency band of the DFS channel during the first period.

In the electronic device according to an example, the first schedule information may enable the external electronic device 503 and the electronic device to perform the NAN communication through the non-DFS channel and the DFS channel during the first period, in case where other channel exists between the non-DFS channel and the DFS channel. In other words, while (another) other channel exists between the non-DFS channel and the DFS channel, the first schedule information may enable the external electronic device 503 and the electronic device to perform the NAN communication through the non-DFS channel and the DFS channel during the first period. That is, in response to (if) (another) other channel existing between the non-DFS channel and the DFS channel, the first schedule information may enable the external electronic device 503 and the electronic device to perform the NAN communication through the non-DFS channel and the DFS channel during the first period. Otherwise (else), i.e., when (another) other channel does not exist between the non-DFS channel and the DFS channel, the first schedule information may not enable the external electronic device 503 and the electronic device to perform the NAN communication through the non-DFS channel and the DFS channel during the first period.

In the electronic device according to an example, a bandwidth of other channel including the frequency band of the non-DFS channel and the frequency band of the DFS channel may be greater than a bandwidth of the non-DFS channel.

In the electronic device according to an example, the instructions may cause, when executed by the at least one processor 620 individually or collectively, the electronic device to configure second schedule information to perform the NDP through the non-DFS channel, in case where the second service discovery frame received from the external electronic device 503 does not include information related to an AP supporting the DFS. In other words; while receiving the second service discovery frame from the external electronic device 503 that does not include information related to an AP supporting the DFS, the instructions may cause, when executed by the at least one processor 620 individually or collectively, the electronic device to configure second schedule information to perform the NDP through the non-DFS channel. That is, in response to (if) receiving the second service discovery frame from the external electronic device 503 that does not include information related to an AP supporting the DFS, the instructions may cause, when executed by the at least one processor 620 individually or collectively, the electronic device to configure second schedule information to perform the NDP through the non-DFS channel. Otherwise (else), i.e., when not receiving the second service discovery frame from the external electronic device 503 that does not include information related to an AP supporting the DFS, the instructions may not cause, when executed by the at least one processor 620 individually or collectively, the electronic device to configure second schedule information to perform the NDP through the non-DFS channel. The instructions may cause, when executed by the at least one processor 620 individually or collectively, the electronic device to perform the NAN communication with the external electronic device 503 based on the second schedule information. The instructions may cause, when executed by the at least one processor 620 individually or collectively, the electronic device to perform the NAN communication based on the first schedule information, in case of receiving, from the external electronic device 503, information indicating that the external electronic device is capable of receiving a signal transmitted from the second AP 502 through the DFS channel. In other words; while receiving from the external electronic device 503, information indicating that the external electronic device is capable of receiving a signal transmitted from the second AP 502 through the DFS channel, the instructions may cause, when executed by the at least one processor 620 individually or collectively, the electronic device to perform the NAN communication based on the first schedule information. That is, in response to (if) receiving from the external electronic device 503, information indicating that the external electronic device is capable of receiving a signal transmitted from the second AP 502 through the DFS channel, the instructions may cause, when executed by the at least one processor 620 individually or collectively, the electronic device to perform the NAN communication based on the first schedule information. Otherwise (else), i.e., when not receiving from the external electronic device 503, information indicating that the external electronic device is capable of receiving a signal transmitted from the second AP 502 through the DFS channel, the instructions may not cause, when executed by the at least one processor 620 individually or collectively, the electronic device to perform the NAN communication based on the first schedule information.

In the electronic device according to an example, the instructions may cause, when executed by the at least one processor 620 individually or collectively, the electronic device to identify, based on the second service discovery frame, whether the external electronic device 503 is connectable to a second AP supporting the DFS. The instructions may cause, when executed by the at least one processor 620 individually or collectively, the electronic device to enable the external electronic device 503 to be connected to the second AP 502 through a DFS channel, in case where the external electronic device 503 is connectable to the second AP 502. In other words; while the external electronic device 503 is connectable to the second AP 502, the instructions may cause, when executed by the at least one processor 620 individually or collectively, the electronic device to enable the external electronic device 503 to be connected to the second AP 502 through a DFS channel. That is, in response to (if) the external electronic device 503 being connectable to the second AP 502, the instructions may cause, when executed by the at least one processor 620 individually or collectively, the electronic device to enable the external electronic device 503 to be connected to the second AP 502 through a DFS channel. Otherwise (else), i.e., when the external electronic device 503 is not connectable to the second AP 502, the instructions may not cause, when executed by the at least one processor 620 individually or collectively, the electronic device to enable the external electronic device 503 to be connected to the second AP 502 through a DFS channel. The instructions may cause, when executed by the at least one processor 620 individually or collectively, the electronic device to perform the NAN communication with the external electronic device 503, based on the first schedule information.

In a recording medium storing at least one program including instructions that cause, when executed by at least one processor 620 of an electronic device individually or collectively, the electronic device to perform operations,
the instructions may cause, when executed by the at least one processor 620 individually or collectively, the electronic device to connect to a first access point (AP) 501 through a non-dynamic frequency selection (non-DFS) channel. The instructions may cause, when executed by the at least one processor 620 individually or collectively, the electronic device to transmit, to an external electronic device 503, a first service discovery frame including information related to a DFS channel and information indicating a maximum bandwidth supportable by the electronic device, in a process of discovering the external electronic device 503 to be connected via an NAN data path (NDP). The instructions may cause, when executed by the at least one processor 620 individually or collectively, the electronic device to connect to a second AP 502 supporting the DFS through the DFS channel while maintaining a connection between the first AP 501 and the electronic device, upon identifying, based on a second service discovery frame received from the external electronic device 503, that the external electronic device 503 supports the DFS and a maximum bandwidth supportable by the external electronic device 503 is greater than a bandwidth of the non-DFS channel. The instructions may cause, when executed by the at least one processor 620 individually or collectively, the electronic device to establish the NDP with the external electronic device 503, based on the first service discovery frame and/or the second service discovery frame. The instructions may cause, when executed by the at least one processor 620 individually or collectively, the electronic device to perform NAN communication with the external electronic device 503, based on first schedule information related to performing the NAN communication through a frequency band of the non-DFS channel and a frequency band of the DFS channel. The first schedule information may enable the external electronic device 503 and the electronic device to perform the NAN communication through the frequency band of the non-DFS channel and the frequency band of the DFS channel during a first period between discovery windows.

In the recording medium according to an example, the first schedule information may enable the external electronic device 503 and the electronic device to perform the NAN communication through the frequency band of the DFS channel and a frequency band of other non-DFS channel during a second period between the discovery windows.

In the recording medium according to an example, the first schedule information may enable the external electronic device 503 and the electronic device to perform the NAN communication through the frequency band of the non-DFS channel and the frequency band of the DFS channel during a second period between the discovery windows.

In the recording medium according to an example, the first schedule information may enable the external electronic device 503 and the electronic device to perform the NAN communication through the frequency band of the non-DFS channel during a second period between the discovery windows.

In the recording medium according to an example, the first schedule information may enable the external electronic device 503 and the electronic device to perform the NAN communication through other channel including the frequency band of the non-DFS channel and the frequency band of the DFS channel during the first period.

In the recording medium according to an example, the first schedule information may enable the external electronic device 503 and the electronic device to perform the NAN communication through the non-DFS channel and the DFS channel during the first period, in case where other channel exists between the non-DFS channel and the DFS channel. In other words; while other (another) channel exists between the non-DFS channel and the DFS channel, the first schedule information may enable the external electronic device 503 and the electronic device to perform the NAN communication through the non-DFS channel and the DFS channel during the first period. That is, in response to (if) other (another) channel existing between the non-DFS channel and the DFS channel, the first schedule information may enable the external electronic device 503 and the electronic device to perform the NAN communication through the non-DFS channel and the DFS channel during the first period. Otherwise (else), i.e., when other (another) channel does not exist between the non-DFS channel and the DFS channel, the first schedule information may not enable the external electronic device 503 and the electronic device to perform the NAN communication through the non-DFS channel and the DFS channel during the first period.

In the recording medium according to an example, a bandwidth of other channel including the frequency band of the non-DFS channel and the frequency band of the DFS channel may be greater than a bandwidth of the non-DFS channel.

In the recording medium according to an example, the instructions may cause, when executed by the at least one processor 620 individually or collectively, the electronic device to configure second schedule information to perform the NDP through the non-DFS channel, in case where the second service discovery frame received from the external electronic device 503 does not include information related to an AP supporting the DFS. In other words; while receiving the second service discovery frame from the external electronic device 503 that does not include information related to an AP supporting the DFS, the instructions may cause, when executed by the at least one processor 620 individually or collectively, the electronic device to configure second schedule information to perform the NDP through the non-DFS channel. That is, in response to (if) receiving the second service discovery frame from the external electronic device 503 that does not include information related to an AP supporting the DFS, the instructions may cause, when executed by the at least one processor 620 individually or collectively, the electronic device to configure second schedule information to perform the NDP through the non-DFS channel. Otherwise (else), i.e., when not receiving the second service discovery frame from the external electronic device 503 that does not include information related to an AP supporting the DFS, the instructions may not cause, when executed by the at least one processor 620 individually or collectively, the electronic device to configure second schedule information to perform the NDP through the non-DFS channel. The instructions may cause, when executed by the at least one processor 620 individually or collectively, the electronic device to perform the NAN communication with the external electronic device 503 based on the second schedule information. The instructions may cause, when executed by the at least one processor 620 individually or collectively, the electronic device to perform the NAN communication based on the first schedule information, in case of receiving, from the external electronic device 503, information indicating that the external electronic device is capable of receiving a signal transmitted from the second AP 502 through the DFS channel. In other words; while receiving from the external electronic device 503, information indicating that the external electronic device is capable of receiving a signal transmitted from the second AP 502 through the DFS channel, the instructions may cause, when executed by the at least one processor 620 individually or collectively, the electronic device to perform the NAN communication based on the first schedule information. That is, in response to (if) receiving from the external electronic device 503, information indicating that the external electronic device is capable of receiving a signal transmitted from the second AP 502 through the DFS channel, the instructions may cause, when executed by the at least one processor 620 individually or collectively, the electronic device to perform the NAN communication based on the first schedule information. Otherwise (else), i.e., when not receiving from the external electronic device 503, information indicating that the external electronic device is capable of receiving a signal transmitted from the second AP 502 through the DFS channel, the instructions may not cause, when executed by the at least one processor 620 individually or collectively, the electronic device to perform the NAN communication based on the first schedule information.

In the recording medium according to an example, the instructions may cause, when executed by the at least one processor individually or collectively, the electronic device to identify, based on the second service discovery frame, whether the external electronic device 503 is connectable to a second AP 502 supporting the DFS. The instructions may cause, when executed by the at least one processor 620 individually or collectively, the electronic device to enable the external electronic device 503 to be connected to the second AP 502 through a DFS channel, in case where the external electronic device 503 is connectable to the second AP. In other words; while the external electronic device 503 is connectable to the second AP, the instructions may cause, when executed by the at least one processor 620 individually or collectively, the electronic device to enable the external electronic device 503 to be connected to the second AP 502 through a DFS channel. That is, in response to (if) the external electronic device 503 being connectable to the second AP, the instructions may cause, when executed by the at least one processor 620 individually or collectively, the electronic device to enable the external electronic device 503 to be connected to the second AP 502 through a DFS channel. Otherwise (else), i.e., when the external electronic device 503 is not connectable to the second AP, the instructions may not cause, when executed by the at least one processor 620 individually or collectively, the electronic device to enable the external electronic device 503 to be connected to the second AP 502 through a DFS channel. The instructions may cause, when executed by the at least one processor 620 individually or collectively, the electronic device to perform the NAN communication with the external electronic device 503, based on the first schedule information.

An operating method of an electronic device according to an example may include an operation of connecting to a first access point (AP) 501 through a non-dynamic frequency selection (non-DFS) channel. The method may include an operation of transmitting, to an external electronic device 503, a first service discovery frame including information related to a DFS channel and information indicating a maximum bandwidth supportable by the electronic device, in a process of discovering the external electronic device 503 to be connected via a neighbor awareness network (NAN) data path (NDP). The method may include an operation of connecting to a second AP 502 supporting the DFS through the DFS channel while maintaining a connection between the first AP 501 and the electronic device, upon identifying, based on a second service discovery frame received from the external electronic device 503, that the external electronic device 503 supports the DFS and a maximum bandwidth supportable by the external electronic device 503 is greater than a bandwidth of the non-DFS channel. The method may include an operation of establishing the NDP with the external electronic device 503, based on the first service discovery frame and/or the second service discovery frame. The method may include an operation of performing NAN communication with the external electronic device 503, based on first schedule information related to performing the NAN communication through a frequency band of the non-DFS channel and a frequency band of the DFS channel. The first schedule information may enable the external electronic device 503 and the electronic device to perform the NAN communication through the frequency band of the non-DFS channel and the frequency band of the DFS channel during a first period between discovery windows.

In the operating method of the electronic device according to an example, the first schedule information may enable the external electronic device 503 and the electronic device to perform the NAN communication through the frequency band of the non-DFS channel and the frequency band of the DFS channel during a second period between the discovery windows.

## Claims

1. An electronic device comprising:
a communication circuitry (610) configured for supporting short-range wireless communication and neighbor awareness network (NAN) communication;
memory (630) storing at least one computer program; and
at least one processor (620),
the at least one computer program comprising instructions that cause, when executed by the at least one processor (620) individually or collectively, the electronic device to:
connect to a first access point (AP) through a non-dynamic frequency selection (non-DFS) channel,
transmit, to an external electronic device, a first service discovery frame including information related to a DFS channel and information indicating a maximum bandwidth supportable by the electronic device, in a process of discovering the external electronic device to be connected via an NAN data path (NDP),
connect to a second AP supporting the DFS through the DFS channel while maintaining a connection between the first AP and the electronic device, upon identifying, based on a second service discovery frame received from the external electronic device, that the external electronic device supports the DFS and that the maximum bandwidth supportable by the external electronic device is greater than a bandwidth of the non-DFS channel,
establish the NDP with the external electronic device, based on the first service discovery frame and/or the second service discovery frame, and
perform NAN communication with the external electronic device, based on first schedule information related to performing the NAN communication through a frequency band of the non-DFS channel and a frequency band of the DFS channel,
wherein the first schedule information enables the external electronic device and the electronic device to perform the NAN communication through the frequency band of the non-DFS channel and the frequency band of the DFS channel during a first period between discovery windows.

2. The electronic device of claim 1, wherein the first schedule information enables the external electronic device and the electronic device to perform the NAN communication through the frequency band of the DFS channel and a frequency band of other non-DFS channel during a second period between the discovery windows.

3. The electronic device of claim 1, wherein the first schedule information enables the external electronic device and the electronic device to perform the NAN communication through the frequency band of the non-DFS channel and the frequency band of the DFS channel during a second period between the discovery windows.

4. The electronic device of claim 1, wherein the first schedule information enables the external electronic device and the electronic device to perform the NAN communication through the frequency band of the non-DFS channel during a second period between the discovery windows.

5. The electronic device of any one of claims 1 to 4, wherein the first schedule information enables the external electronic device and the electronic device to perform the NAN communication through other channel including the frequency band of the non-DFS channel and the frequency band of the DFS channel during the first period.

6. The electronic device of any one of claims 1 to 4, wherein the first schedule information enables the external electronic device and the electronic device to perform the NAN communication through the non-DFS channel and the DFS channel during the first period, in case where other channel exists between the non-DFS channel and the DFS channel.

7. The electronic device of any one of claims 1 to 6, wherein a bandwidth of other channel including the frequency band of the non-DFS channel and the frequency band of the DFS channel is greater than a bandwidth of the non-DFS channel.

8. The electronic device of claim 1, wherein the instructions cause, when executed by the at least one processor individually or collectively, the electronic device to:
configure second schedule information to perform the NDP through the non-DFS channel, in case where the second service discovery frame received from the external electronic device does not include information related to the AP supporting the DFS,
perform the NAN communication with the external electronic device based on the second schedule information, and
perform the NAN communication based on the first schedule information, in case of receiving, from the external electronic device, information indicating that the external electronic device is capable of receiving a signal transmitted from the second AP through the DFS channel.

9. The electronic device of claim 1, wherein the instructions cause, when executed by the at least one processor individually or collectively, the electronic device to:
identify, based on the second service discovery frame, whether the external electronic device is connectable to the second AP supporting the DFS,
enable the external electronic device to be connected to the second AP through a DFS channel, in case where the external electronic device is connectable to the second AP, and
perform the NAN communication with the external electronic device, based on the first schedule information.

10. A recording medium storing at least one program including instructions that cause, when executed by at least one processor (620) of an electronic device individually or collectively, the electronic device to perform operations,
the instructions causing, when executed by the at least one processor (620) individually or collectively, the electronic device to:
connect to a first access point (AP) through a non-dynamic frequency selection (non-DFS) channel,
transmit, to an external electronic device, a first service discovery frame including information related to a DFS channel and information indicating a maximum bandwidth supportable by the electronic device, in a process of discovering the external electronic device to be connected via an NAN data path (NDP),
connect to a second AP supporting the DFS through the DFS channel while maintaining a connection between the first AP and the electronic device, upon identifying, based on a second service discovery frame received from the external electronic device, that the external electronic device supports the DFS and a maximum bandwidth supportable by the external electronic device is greater than a bandwidth of the non-DFS channel,establish the NDP with the external electronic device, based on the first service discovery frame and/or the second service discovery frame, and
perform NAN communication with the external electronic device, based on first schedule information related to performing the NAN communication through a frequency band of the non-DFS channel and a frequency band of the DFS channel,
wherein the first schedule information enables the external electronic device and the electronic device to perform the NAN communication through the frequency band of the non-DFS channel and the frequency band of the DFS channel during a first period between discovery windows.

11. The recording medium of claim 10, wherein the first schedule information enables the external electronic device and the electronic device to perform the NAN communication through the frequency band of the DFS channel and a frequency band of other non-DFS channel during a second period between the discovery windows.

12. The recording medium of claim 10, wherein the first schedule information enables the external electronic device and the electronic device to perform the NAN communication through the frequency band of the non-DFS channel and the frequency band of the DFS channel during a second period between the discovery windows.

13. The recording medium of claim 10, wherein the first schedule information enables the external electronic device and the electronic device to perform the NAN communication through the frequency band of the non-DFS channel during a second period between the discovery windows.

14. The recording medium of any one of claims 10 to 13, wherein the first schedule information enables the external electronic device and the electronic device to perform the NAN communication through other channel including the frequency band of the non-DFS channel and the frequency band of the DFS channel during the first period.

15. An operating method of an electronic device, the method comprising:
connecting to a first access point (AP) through a non-dynamic frequency selection (non-DFS) channel;
transmitting, to an external electronic device, a first service discovery frame including information related to a DFS channel and information indicating a maximum bandwidth supportable by the electronic device, in a process of discovering the external electronic device to be connected via a neighbor awareness network (NAN) data path (NDP);
connecting to a second AP supporting the DFS through the DFS channel while maintaining a connection between the first AP and the electronic device, upon identifying, based on a second service discovery frame received from the external electronic device, that the external electronic device supports the DFS and a maximum bandwidth supportable by the external electronic device is greater than a bandwidth of the non-DFS channel;
establishing the NDP with the external electronic device, based on the first service discovery frame and/or the second service discovery frame; and
performing NAN communication with the external electronic device, based on first schedule information related to performing the NAN communication through a frequency band of the non-DFS channel and a frequency band of the DFS channel,
wherein the first schedule information enables the external electronic device and the electronic device to perform the NAN communication through the frequency band of the non-DFS channel and the frequency band of the DFS channel during a first period between discovery windows.
